# EUROPEAN PATENT APPLICATION

(11) **EP 4 761 446 A2**
(43) Date of publication of application: **17.06.2026**
(21) Application number: 26176020.1
(22) Date of filing: 12.08.2021
(51) Int. Cl.: H04W 72/56

(54) **BUFFER STATUS REPORT FORMAT, TABLE, AND PROCEDURES FOR EXTENDED REALITY SERVICES**

(30) Priority: 12.08.2020 US 202063064467 P
(62) Divisional of application: 25189719.5
(71) Applicant: Telefonaktiebolaget LM Ericsson (publ), 164 83 Stockholm (SE)
(72) Inventor: PRADAS, Jose Luis, SE-118 27 Stockholm (SE)
(74) Representative: Haseltine Lake Kempner LLP

(57) **Abstract**

A communication device in a network can receive a buffer status report, BSR, format configuration specifying at least one non-legacy BSR format and/or at least one non-legacy buffer status table to use for reporting BSR to a network node. The communication device can further select a non-legacy BSR format from the at least one non-legacy BSR format and/or a non-legacy buffer status table from the at least one non-legacy buffer status table. The communication device can further generate a BSR report based on the non-legacy BSR format and/or the non-legacy buffer status table. The communication device can further transmit the BSR report towards the network node.

## Description

### TECHNICAL FIELD

The present disclosure relates generally to communications, and more particularly to communication methods and related devices and nodes supporting wireless communications.

### BACKGROUND

A communication device such as a user equipment, UE, reports to the network the buffer status waiting for transmission in the Media Access Control ("MAC") Control Element ("CE") Buffer Status Report ("BSR"). There are currently 4 different BSR formats which communication devices can send to the network. The 4 different BSR formats are: Short BSR format (fixed size); Short Truncated BSR format (fixed size); Long Truncated BSR format (variable size); and Long BSR format (variable size).

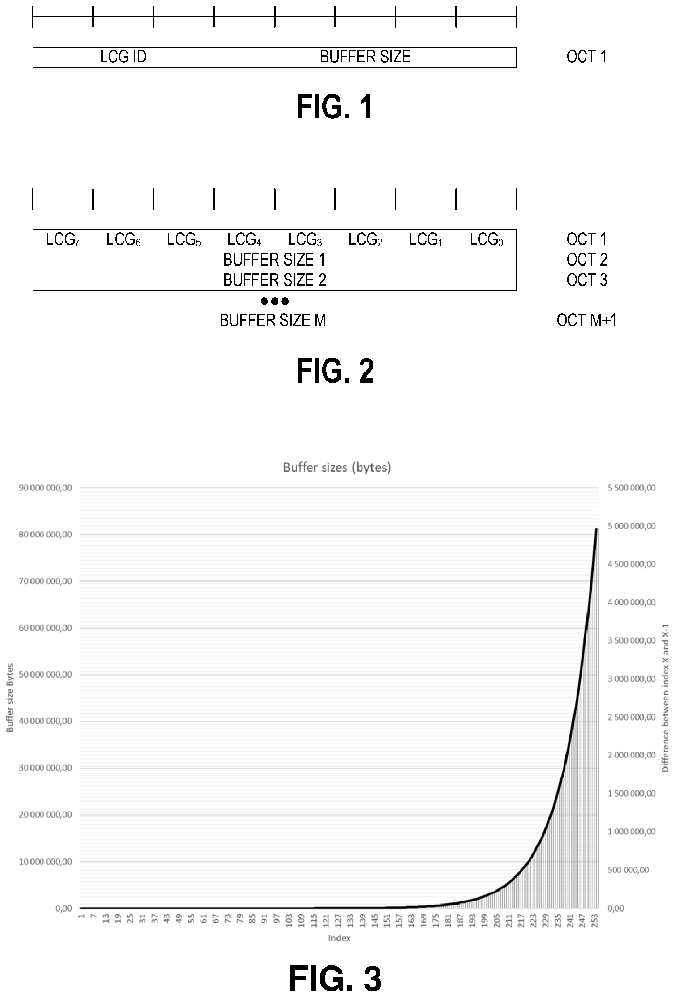

FIG. 1 illustrates the short BSR format and the short truncated BSR format. FIG. 2 illustrates the long BSR and long truncated BSR format.

There are 3 type of BSRs: regular BSR, periodic BSR, and padding BSR.

The regular BSR is triggered if UL data, for a logical channel which belongs to a logical channel group ("LCG"), becomes available to the MAC entity; and either this UL data belongs to a logical channel with higher priority than the priority of any logical channel containing available UL data which belong to any LCG; or none of the logical channels which belong to an LCG contains any available UL data. When more than one LCG has data available for transmission, then the communication device uses the long BSR format and reports all LCGs which have data. However, if only one LCG has data, the short BSR format is used.

The periodic BSR is configured by the network. When informed by the network, via a radio resource control ("RRC") message, the communication device periodically reports the BSR. When more than one LCG has data available for transmission, then the communication device uses the long BSR format and reports all LCGs which have data. However, if only one LCG has data, the short BSR format is used.

The padding BSR is an opportunistic method to provide buffer status information to the network when a MAC protocol data unit ("PDU") has a number of padding bits equal or larger than one of the BSR formats. In this case, the wireless terminal would add the padding BSR replacing the corresponding padding bits. In this case, the BSR format to be used depends on the number of padding bits, the number of logical channels which have data for transmissions, and the size of the BSR format. When more than one LCG has data for transmission, one of the following three formats is used: the short truncated BSR, the long BSR, or the long truncated BSR. The selection of the BSR format depends on the number of available padding bits. When only one LCG has data for transmission, then the short BSR format is used.

For a wireless terminal, one MAC PDU can contain at most one BSR MAC CE.

### SUMMARY

There are several issues with current BSR tables and procedures. One issue is that for a wireless terminal, one MAC PDU can contain at most one BSR MAC CE.

Another issue is that extended reality ("XR") services generate packet sizes which may be considerably large. This results in that the index which the BSR may indicate will be a high value. The higher the buffer status index is, the larger the buffer size is reported. The difference between two consecutive buffer status indexes increases as the indexes increases. It is especially visible in the long BSR table. This results in that there is more uncertainty with regards the real buffer size at the communication device and it also results in that the network may overshoot the grant provided to the communication device which affects, in overall, the network capacity.

With regards the short BSR table, the maximum size which can be reported is 150.000 bytes. Thus, when a UE has a buffer size above this value, the UE reports an index which indicates ">150.000" bytes. This information is unprecise and can also lead to overshooting the grant and/or delays if the network does not provide a sufficiently large grant.

According to various embodiments of inventive concepts, other BSR formats are used that can provide a more accurate buffer status information, which results in the network not needing to overshoot in excess with the grant and enables network capacity maximization.

According to some embodiments, a method performed by a communication device in a network is provided. The method can include receiving a buffer status report, BSR, format configuration specifying at least one non-legacy BSR format and/or at least one non-legacy buffer status table to use for reporting BSR to a network node. The method can further include selecting a non-legacy BSR format from the at least one non-legacy BSR format and/or a non-legacy buffer status table from the at least one non-legacy buffer status table. The method can further include generating a BSR report based on the non-legacy BSR format and/or the non-legacy buffer status table. The method can further include transmiting the BSR report towards the network node.

According to other embodiments, a method performed by a network node in a network is provided. The method can include receiving a buffer status report, BSR, indication message from a communication device. The BSR indication message can indicate at least one non-legacy BSR format and/or at least one non-legacy buffer status table the communication device supports. The method can further include determining which non-legacy BSR formats and/or non-legacy BSR buffer status tables are supported by the communication device based on the BSR indication message. The method can futher include determining at least one non-legacy BSR format and/or at least one non-legacy BSR buffer status table for the communication device to use based on which non-legacy BSR formats and/or non-legacy BSR buffer status tables are supported by the communication device. The method can further include transmitting a radio resource control, RRC, configuration message indicating one or more non-legacy BSR formats and/or one or more non-legacy buffer status tables to use for BSR reporting for the communication device to use.

According to other embodiments, a communication device, network node, computer program, or computer program code is provided to perform the methods described above.

One advantage that may be achieved using the various embodiments of inventive concepts is reduced latency for critical services.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
FIG. 1 is an illustration of Short BSR and Short Truncated BSR MAC CE;
FIG. 2 is an illustration of Long BSR and Long Truncated BSR MAC CE;
FIG. 3 is a graph illustrating a buffer size difference between two consecutive indexes;
FIG. 4 is a block diagram illustrating a wireless device UE according to some embodiments of inventive concepts;
FIG. 5 is a block diagram illustrating a radio access network RAN node (e.g., a base station eNB/gNB) according to some embodiments of inventive concepts;
FIG. 6 is a block diagram illustrating a core network CN node (e.g., an AMF node, an SMF node, etc.) according to some embodiments of inventive concepts;
FIG. 7 is an illustration of a BSR format indicating one LCG and a table index according to some embodiments of inventive concepts;
FIG. 8 is an illustration of a BSR format indicating one LCD and a table index according to some embodiments of inventive concepts;
FIG. 9 is an illustration of a BSR format indicating multiple LCIDs and table indexes according to some embodiments of inventive concepts;
FIG. 10 is a signaling diagram illustrating communications between a communication device and a network device according to some embodiments of inventive concepts;
FIGS. 11-17 are flow charts illustrating operations of a communication device according to some embodiments of inventive concepts;
FIG. 18 is a flow chart illustrating operations of a network node according to some embodiments of inventive concepts;
FIG. 19 is a block diagram of a wireless network in accordance with some embodiments;
FIG. 20 is a block diagram of a user equipment in accordance with some embodiments
FIG. 21 is a block diagram of a virtualization environment in accordance with some embodiments;
FIG. 22 is a block diagram of a telecommunication network connected via an intermediate network to a host computer in accordance with some embodiments;
FIG. 23 is a block diagram of a host computer communicating via a base station with a user equipment over a partially wireless connection in accordance with some embodiments;
FIG. 24 is a block diagram of methods implemented in a communication system including a host computer, a base station and a user equipment in accordance with some embodiments;
FIG. 25 is a block diagram of methods implemented in a communication system including a host computer, a base station and a user equipment in accordance with some embodiments;
FIG. 26 is a block diagram of methods implemented in a communication system including a host computer, a base station and a user equipment in accordance with some embodiments; and
FIG. 27 is a block diagram of methods implemented in a communication system including a host computer, a base station and a user equipment in accordance with some embodiments.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

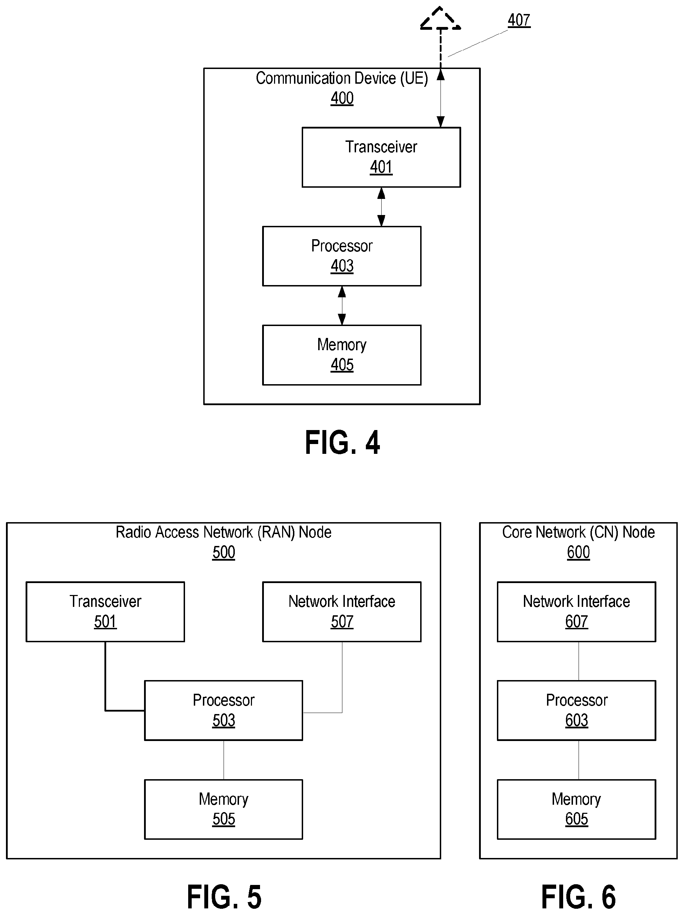

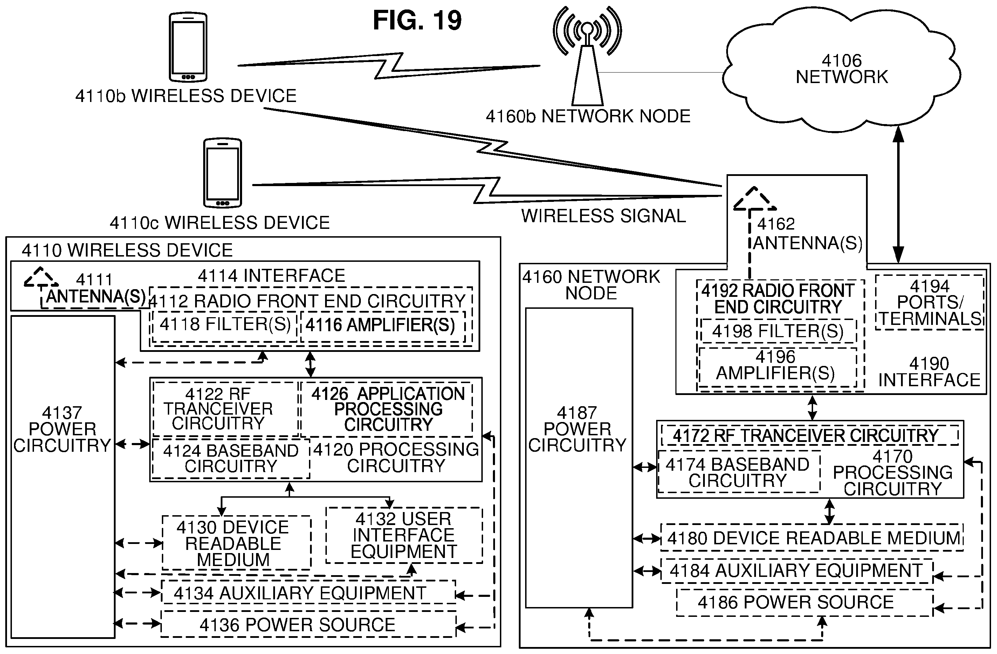

FIG. 4 is a block diagram illustrating elements of a communication device 400 (also referred to as a mobile terminal, a mobile communication terminal, a wireless device, a wireless terminal, mobile device, a wireless communication terminal, user equipment, UE, a user equipment node/terminal/device, etc.) configured to provide wireless communication according to embodiments of inventive concepts. (Communication device 400 may be provided, for example, as discussed below with respect to wireless device 4110 of FIG. 19.) As shown, communication device UE may include an antenna 407 (e.g., corresponding to antenna 4111 of FIG. 19), and transceiver circuitry 401 (also referred to as a transceiver, e.g., corresponding to interface 4114 of FIG. 19) including a transmitter and a receiver configured to provide uplink and downlink radio communications with a base station(s) (e.g., corresponding to network node 4160 of FIG. 19, also referred to as a RAN node) of a radio access network. Communication device UE may also include processing circuitry 403 (also referred to as a processor, e.g., corresponding to processing circuitry 4120 of FIG. 19) coupled to the transceiver circuitry, and memory circuitry 405 (also referred to as memory, e.g., corresponding to device readable medium 4130 of FIG. 19) coupled to the processing circuitry. The memory circuitry 405 may include computer readable program code that when executed by the processing circuitry 403 causes the processing circuitry to perform operations according to embodiments disclosed herein. According to other embodiments, processing circuitry 403 may be defined to include memory so that separate memory circuitry is not required. Communication device 400 may also include an interface (such as a user interface) coupled with processing circuitry 403, and/or communication device 400 may be incorporated in a vehicle.

As discussed herein, operations of communication device 400 may be performed by processing circuitry 403 and/or transceiver circuitry 401. For example, processing circuitry 403 may control transceiver circuitry 401 to transmit communications through transceiver circuitry 401 over a radio interface to a radio access network node (also referred to as a base station) and/or to receive communications through transceiver circuitry 401 from a RAN node over a radio interface. Moreover, modules may be stored in memory circuitry 405, and these modules may provide instructions so that when instructions of a module are executed by processing circuitry 403, processing circuitry 403 performs respective operations (e.g., operations discussed below with respect to Example Embodiments relating to communication devices). According to some embodiments, a communication device 400 and/or an element(s)/function(s) thereof may be embodied as a virtual node/nodes and/or a virtual machine/machines.

FIG. 5 is a block diagram illustrating elements of a radio access network RAN node 500 (also referred to as a network node, base station, eNodeB/eNB, gNodeB/gNB, etc.) of a Radio Access Network ("RAN") configured to provide cellular communication according to embodiments of inventive concepts. (RAN node 500 may be provided, for example, as discussed below with respect to network node 4160 of FIG. 19.) As shown, the RAN node may include transceiver circuitry 501 (also referred to as a transceiver, e.g., corresponding to portions of interface 4190 of FIG. 19) including a transmitter and a receiver configured to provide uplink and downlink radio communications with mobile terminals. The RAN node may include network interface circuitry 507 (also referred to as a network interface, e.g., corresponding to portions of interface 4190 of FIG. 19) configured to provide communications with other nodes (e.g., with other base stations) of the RAN and/or core network CN. The network node may also include processing circuitry 503 (also referred to as a processor, e.g., corresponding to processing circuitry 4170) coupled to the transceiver circuitry, and memory circuitry 505 (also referred to as memory, e.g., corresponding to device readable medium 4180 of FIG. 19) coupled to the processing circuitry. The memory circuitry 505 may include computer readable program code that when executed by the processing circuitry 503 causes the processing circuitry to perform operations according to embodiments disclosed herein. According to other embodiments, processing circuitry 503 may be defined to include memory so that a separate memory circuitry is not required.

As discussed herein, operations of the RAN node may be performed by processing circuitry 503, network interface 507, and/or transceiver 501. For example, processing circuitry 503 may control transceiver 501 to transmit downlink communications through transceiver 501 over a radio interface to one or more mobile terminals UEs and/or to receive uplink communications through transceiver 501 from one or more mobile terminals UEs over a radio interface. Similarly, processing circuitry 503 may control network interface 507 to transmit communications through network interface 507 to one or more other network nodes and/or to receive communications through network interface from one or more other network nodes. Moreover, modules may be stored in memory 505, and these modules may provide instructions so that when instructions of a module are executed by processing circuitry 503, processing circuitry 503 performs respective operations (e.g., operations discussed below with respect to Example Embodiments relating to RAN nodes). According to some embodiments, RAN node 400 and/or an element(s)/function(s) thereof may be embodied as a virtual node/nodes and/or a virtual machine/machines.

According to some other embodiments, a network node may be implemented as a core network CN node without a transceiver. In such embodiments, transmission to a communication device UE may be initiated by the network node so that transmission to the communication device UE is provided through a network node including a transceiver (e.g., through a base station or RAN node). According to embodiments where the network node is a RAN node including a transceiver, initiating transmission may include transmitting through the transceiver.

FIG. 6 is a block diagram illustrating elements of a core network CN node (e.g., an SMF node, an AMF node, etc.) of a communication network configured to provide cellular communication according to embodiments of inventive concepts. As shown, the CN node may include network interface circuitry 607 (also referred to as a network interface) configured to provide communications with other nodes of the core network and/or the radio access network RAN. The CN node may also include a processing circuitry 603 (also referred to as a processor) coupled to the network interface circuitry, and memory circuitry 605 (also referred to as memory) coupled to the processing circuitry. The memory circuitry 605 may include computer readable program code that when executed by the processing circuitry 603 causes the processing circuitry to perform operations according to embodiments disclosed herein. According to other embodiments, processing circuitry 603 may be defined to include memory so that a separate memory circuitry is not required.

As discussed herein, operations of the CN node may be performed by processing circuitry 603 and/or network interface circuitry 607. For example, processing circuitry 603 may control network interface circuitry 607 to transmit communications through network interface circuitry 607 to one or more other network nodes and/or to receive communications through network interface circuitry from one or more other network nodes. Moreover, modules may be stored in memory 605, and these modules may provide instructions so that when instructions of a module are executed by processing circuitry 603, processing circuitry 603 performs respective operations (e.g., operations discussed below with respect to Example Embodiments relating to core network nodes). According to some embodiments, CN node 600 and/or an element(s)/function(s) thereof may be embodied as a virtual node/nodes and/or a virtual machine/machines.

As previously indicated, services including XR services generate packet sizes which may be considerably large, which results in that the index which the BSR may indicate will be a high value. The higher the buffer status index is, the larger the buffer size is reported. The difference between two consecutive buffer status indexes increases as the indexes increases. The difference is especially visible in the long BSR table as shown in FIG. 3. This results in that there is more uncertainty with regards the real buffer size at the communication device and it also results in that the network can overshoot the grant provided to the communication device, which affects the overall network capacity.

With regards the short BSR table, the maximum size which can be reported is 150.000 bytes. Thus, when a wireless terminal has a buffer size above this maximum size, the communication device reports an index which indicates ">150.000" bytes. This information is unprecise and can lead to overshooting the resources grant and/or delays if the network does not provide a sufficiently large resource grant.

MAC specifications define the BSR tables, one for the short BSR, and one for the long BSR. However, these tables are not well suited for XR services and other services in which packet sizes are relatively large.

The current BSR format (i.e., legacy BSR format) does not allow for new tables than the currently defined and the current BSR procedures are not suitable if new tables and formats are introduced. For example, only one BSR MAC CE can be transmitted in a MAC PDU. This is a limiting factor when there are several BSR types which provide a more precise information than the legacy BSR formats.

The various embodiments of inventive concepts provide two primary tenets: 1) Defines a new BSR format which: identifies one BSR among a plurality of BSR tables; provides the buffer status of at least one Logical Channel Identity ("LCID"), or a Logical Channel Group ("LCG"); and provides the corresponding buffer status index in the indicated BSR table; and 2) Provides Co-existence procedures for the legacy BSR and the new BSR for: regular and periodic BSR procedures; and padding BSR procedures.

Using various embodiments of the inventive concepts described herein achieve a more accurate buffer status that is provided to the network, which results in the network not needing to overshoot in excess the resource grant and enables the maximization of network capacity. Latency for critical services may be reduced when the various embodiments are used.

### Defining a BSR format

A "new" BSR format is described where the BSR format can identify one buffer status table among a plurality of buffer status tables. This can be achieved in one embodiment using a new LCID for each new buffer status table. In another embodiment, it can be done by defining a field in the BSR format that indicates the buffer status table.

Additionally, the new BSR format should provide the buffer status information for at least one LCID. The BSR would indicate the LCID for which the buffer status is reported, and the buffer status information. Alternatively, the new BSR format could indicate the LCG for which the buffer status is reported, and the buffer status.

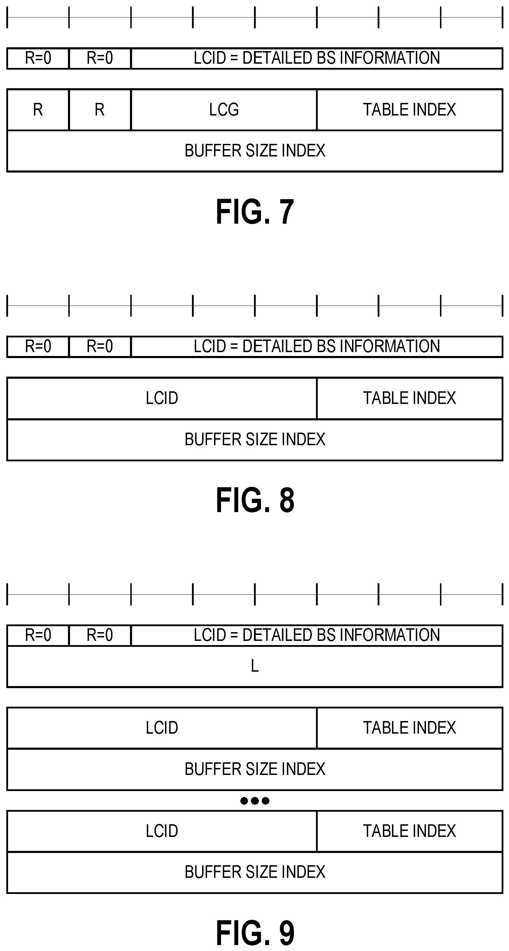

Alternatively, the new BSR could provide one or more LCIDs or LCGs with their respective BS and the respective buffer status tables used for each of them. In this case the L-field (length field) may be required in the header, as shown in FIG. 9.

Some format examples are shown in FIG. 7, FIG. 8, and FIG. 9. It should be noted that the length of each of the fields as well as the number of reported LCG or LCID may vary depending on the range which may want to be indicated without limiting the inventive concepts described herein. For example, other BSR formats can be used.

### Triggering and handling legacy BSR and the new BSR(s)

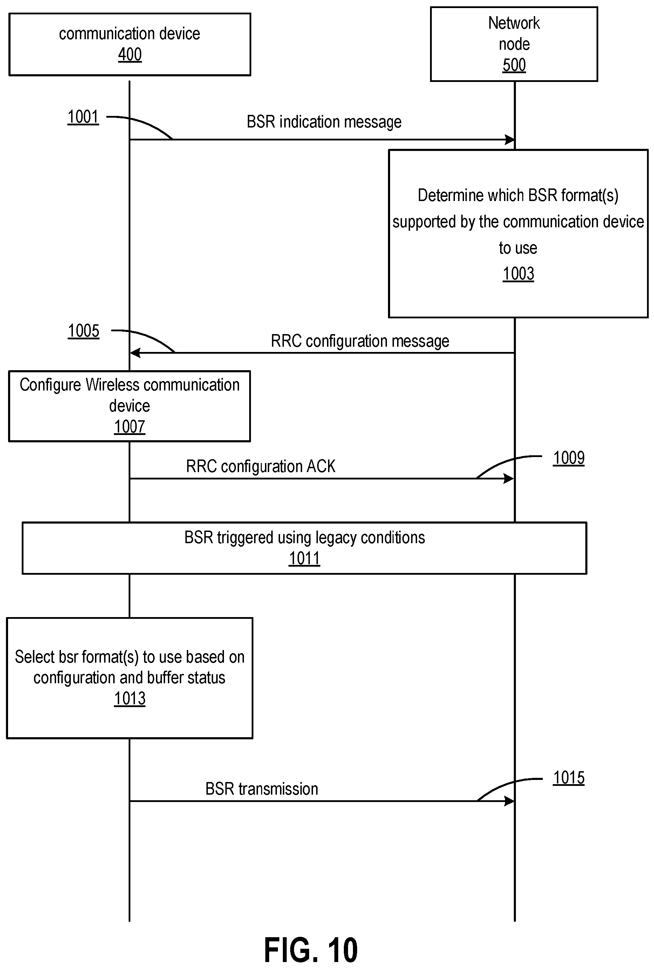

Turning to FIG. 10, a procedure for using new BSRs is illustrated. In operation 1001, the communication device 400 reports, via RRC, in that the communication device 400 supports one or more of the new buffer status table(s) and the new BSR format(s) (e.g., when there are more than one new BSR format). These indications of support could be explicit or implicit. For example, the communication device 400 would report that communication device 400 supports the new BSR format and, implicitly, it would imply the support of a set of a buffer status tables. Alternatively, the communication device 400 would report the support of the new BSR and, separately, a second indication would implicitly or explicitly indicate the support of one or more buffer status table(s). For example, if the communication device 400 indicates the support of a certain feature, it would implicitly mean that the communication device 400 also supports buffer tables A, and B but not table C. It could also be that the support of a certain feature also implies the support of a one or more tables and the support of the new BSR(s).

The network (e.g., the network node 500) would, responsive to receiving the BSR support message indicating support of the new BSR format(s), determine which BSR format(s) supported by the communication device to use in operation 1003. The network sends a RRC configuration message in operation 1005 to configure the communication device 400 to use the BSR(s) determined. Additionally, the network could also indicate to the communication device 400 which tables from those supported by the communication device 400, should be used. If no tables are explicitly indicated, the communication device 400 would be allowed to use all the tables. Alternatively, the configuration of a certain feature would also imply the configuration of one or more specific tables.

In addition, the network could configure and indicate one or more LCID or LCGs for which the new BSR and tables would apply.

In operation 1007, the communication device receives the RRC configuration message and configures the communication device 400. The communication device 400 then transmits a RRC Configuration acknowledge message to the network node 500.

When the communication device 400 is configured to use the new BSR, the regular BSR is triggered using legacy conditions in operation 1011. The communication device would select the BSR format(s) to use based on the configuration and buffer status in operation 1013. In various embodiments of inventive concepts, the communication device selects the BSR format as follows:

If only one LCG has data and this LCG, or the LCID which received data and belongs to this LCG, has been configured to use the new format.

The new BSR format is used to report the data of the LCG or the LCID which triggered the regular BSR. The short BSR is then not used.

Alternatively, both the short BSR and the new BSR are triggered. The short BSR format is used to report the LCG (as in legacy behavior), and the new BSR is used to report the buffer of the LCID.

In addition to the above, the new BSR is used instead of the short BSR or in addition to the short BSR, if the buffer status is above a certain threshold or the buffer status index in the legacy buffer status table is above a threshold.

When more than one LCG has data available for transmissions, if the regular BSR is triggered due to UL data 1) for a logical channel which was configured with the new BSR, or 2) for a logical channel which belongs to an LCG which is configured to use the new BSR, then the UE will use the long BSR format as in legacy, and will use the new BSR format to report the LCID or the LCG which triggered the regular BSR.

Alternatively, all LCIDs or LCGs configured to use the new BSR are reported with the new BSR.

Alternatively, the long BSR does not include the LCG(s) which are reported with the new BSR.

In addition to the above, the new BSR is used if the buffer status in the configured LCID or LCG is above a certain threshold or the buffer status index in the legacy buffer status table is above a threshold.

The periodic BSR would follow the same procedure as described above for the regular BSR.

For padding BSR, legacy procedures can be used for the new BSR formats. In case sufficient padding bits are available after the communication device 400 selects the corresponding legacy BSR format and, if any LCG or LCID has been configured with the new BSR (or tables), and there is data in the buffer for the respective LCG(s) or LCID(s), then the communication device 400 would also use the new BSR to report one or more of the configured LCGs or LCIDs. When not all LCGs or LCIDs can be reported, the communication device 400 would choose the one with highest priority. Alternatively, the new BSR is used if the buffer status for the configured LCG(s) or LCID(s) are above a certain threshold or the buffer status index in the legacy buffer status table is above a threshold.

In all of these scenarios, a MAC PDU could contain one of the legacy BSR MAC CE and one or more of the new BSRs.

When the network receives the new BSR format, the network can allocate a more appropriate grant according to the information provided in the new BSR format.

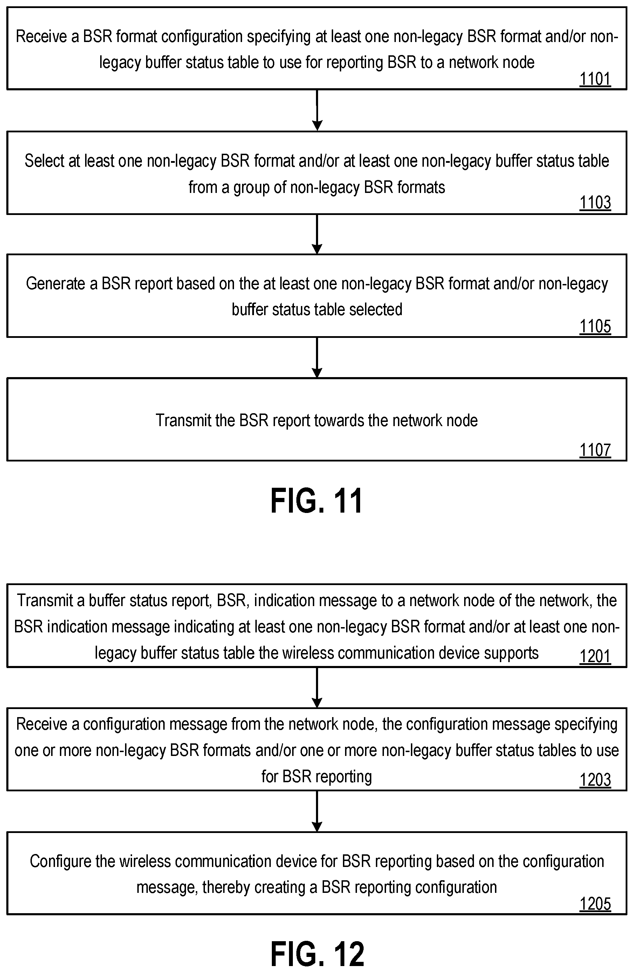

Operations of the communication device 400 (implemented using the structure of the block diagram of FIG. 4) will now be discussed with reference to the flow chart of FIG. 11 according to some embodiments of inventive concepts. For example, modules may be stored in memory 405 of FIG. 4, and these modules may provide instructions so that when the instructions of a module are executed by respective communication device processing circuitry 403, processing circuitry 403 performs respective operations of the flow chart.

Turning to FIG. 11, at block 1101, the processing circuitry 403 receives, via transceiver circuity 401, a buffer status report, BSR, format configuration specifying at least one non-legacy BSR format and/or non-legacy buffer status table to use for reporting BSR to a network node. The BSR format configuration may be in the form of a RRC configuration message. A non-legacy BSR format is defined as a new BSR format which older communication devices (i.e. legacy devices) are unable to be configured to use. In other words, a non-legacy BSR format is a format other than the Short BSR format, the Short Truncated BSR format, the Long Truncated BSR format, and the Long BSR format. A legacy BSR format is any one of the Short BSR format, the Short Truncated BSR format, the Long Truncated BSR format, and the Long BSR format.

The BSR format configuration may be received when the communication device 400 joins a network. One way to receive the configuration is illustrated in FIG. 12. Turning to FIG. 12, in block 1201, the processing circuitry 403 transmits, via transceiver circuitry 401, a buffer status report, BSR, indication message to a network node of the network, the BSR indication message indicating at least one non-legacy BSR format and/or at least one non-legacy buffer status table the communication device supports.

In block 1203, the processing circuitry 403 receives a configuration message from the network node, the configuration message specifying one or more non-legacy BSR formats and/or one or more non-legacy buffer status tables to use for BSR reporting. The configuration message may be a RRC configuration message as illustrated in FIG. 10. The configuration message in some embodiments specifies the one or more non-legacy BSR formats and/or one or more non-legacy buffer status tables to use for BSR reporting for a LCG or LCID. In other embodiments, the configuration message specifies an LCG or LCID in which the one or more non-legacy BSR formats and/or one or more legacy buffer status tables are to be used.

In block 1205, the processing circuitry 403 configures the communication device 400 for BSR reporting based on the configuration message, thereby creating a BSR reporting configuration. The configuring may include rules to use when selecting BSR format and/or a BSR buffer status table to use.

Returning to FIG. 11, in block 1103, the processing circuitry 403 selects at least one non-legacy BSR format and/or at least one non-legacy buffer status table from a group of non-legacy BSR formats. The group of non-legacy BSR formats can include one or more non-legacy BSR formats and/or one or more non-legacy buffer status tables. When the BSR format configuration limits the non-legacy BSR formats and/or the non-legacy buffer status tables to specific non-legacy BSR formats and/or specific non-legacy buffer status tables, then the group of non-legacy BSR formats can be limited to the specific non-legacy BSR formats and/or specific non-legacy buffer status tables.

In various other embodiments of inventive concepts, a legacy BSR format and/or a legacy buffer status table is also used. Thus, selecting the at least one non-legacy BSR format comprises selecting the at least one non-legacy BSR format from the group of non-legacy BSR formats and at least one legacy BSR format from a group of legacy BSR formats and wherein transmitting the BSR report comprises transmitting a BSR report that includes the at least one non-legacy BSR format from the group of non-legacy BSR formats and the at least one legacy BSR format from the group of legacy BSR formats. Alternatively at least one non-legacy buffer status table and at least one legacy buffer status table are selected.

In block 1105, the processing circuitry 403 generates a BSR report based on the at least one non-legacy BSR format and/or non-legacy buffer status table selected. In block 1107, the processing circuitry 403 transmits the BSR report towards the network node.

In some embodiments of inventive concepts, generating the BSR report depends on whether there is only one logical channel group, LCG, has data and this LCG or a logical channel identity, LCID, which received data and belongs to this LCG, has been configured to use a non-legacy BSR format or whether there is more than one logical channel group, LCG, has data available for transmission.

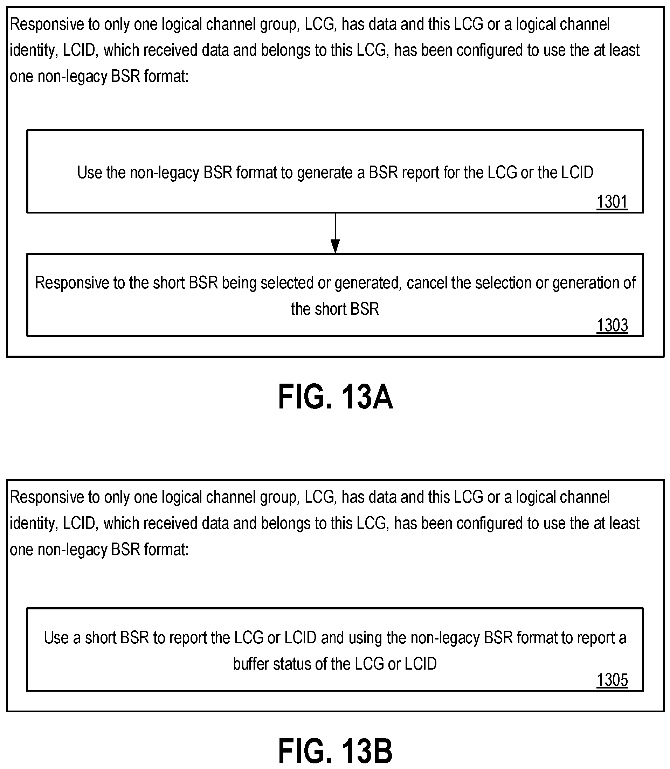

For example, turning to FIG. 13A, in block 1301, in generating the BSR report, the processing circuitry 403, responsive to only one logical channel group, LCG, has data and this LCG or a logical channel identity, LCID, which received data and belongs to this LCG, has been configured to use a non-legacy BSR format, uses the non-legacy BSR format to generate a BSR report for the data of the LCG or the LCID which triggered the BSR report.

In block 1303, the processing circuitry 403, responsive to the short BSR being selected or generated, cancels the selection or generation of the short BSR. This may occur when the processing circuitry 403 triggers a short BSR but the LCG that triggered the short BSR or the LCID belonging to this LCG received data and has been configured to use a non-legacy format. When this happens, the processing circuitry 403 generates a non-legacy BSR and cancels the short BSR.

Turning to FIG. 13B, in block 1305, in generating the BSR report, the processing circuitry 403, responsive to only one logical channel group, LCG, has data and this LCG or a logical channel identity, LCID, which received data and belongs to this LCG, has been configured to use a non-legacy BSR format, uses a short BSR to report the LCG and using the non-legacy BSR format to report a buffer status of the LCID.

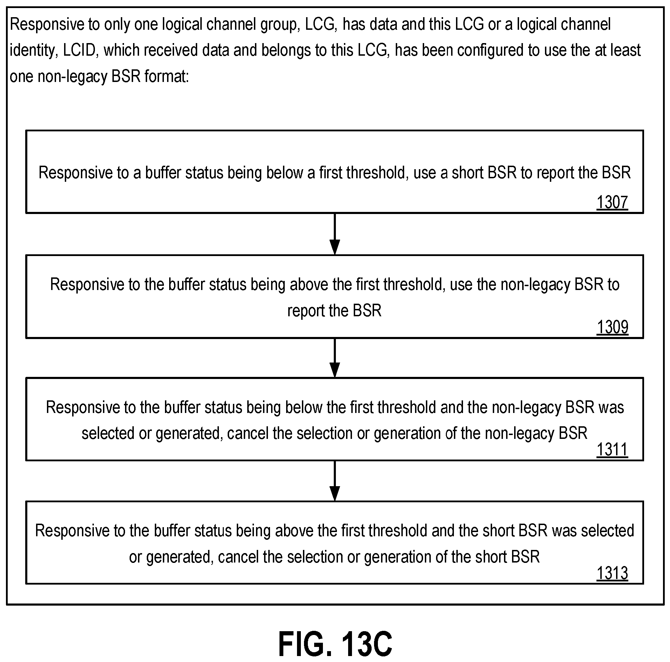

Turning to FIG. 13C, in block 1307, in generating the BSR report, the processing circuitry 403, responsive to only one logical channel group, LCG, has data and this LCG or a logical channel identity, LCID, which received data and belongs to this LCG, has been configured to use a non-legacy BSR format and responsive to a buffer status being below a first threshold, uses a short BSR to report the BSR. Responsive to only one logical channel group, LCG, has data and this LCG or a logical channel identity, LCID, which received data and belongs to this LCG, has been configured to use a non-legacy BSR format and responsive to the buffer status being above the first threshold, the processing circuitry 403 uses the non-legacy BSR format to report the BSR in block 1309.

In various embodiments, in using the non-legacy BSR format to report the BSR, the processing circuitry 403 may also using the short BSR to report the BSR.

In some embodiments, response to the to the buffer status being below the first threshold and the non-legacy BSR was selected or generated, the processing circuitry 403 cancels the selection or generation of the non-legacy BSR. In other embodiments, the processing circuitry 403 also uses the short BSR format to report the BSR.

In block 1311, the processing circuitry 403, responsive to the buffer status being below the first threshold and the non-legacy BSR was selected or generated, cancels the selection or generation of the non-legacy BSR. In block 1313, the processing circuitry 403, responsive to the buffer status being above the first threshold and the short BSR was selected or generated, cancels the selection or generation of the short BSR. This can occur when the processing circuitry 403 is triggered to generate a BSR and uses the short BSR format to generate the BSR. Upon determining that the LCG or LCID which is the one that has data is configured to use the non-legacy format and the buffer status is above the first threshold where the non-legacy BSR is to be used to generate the BSR.

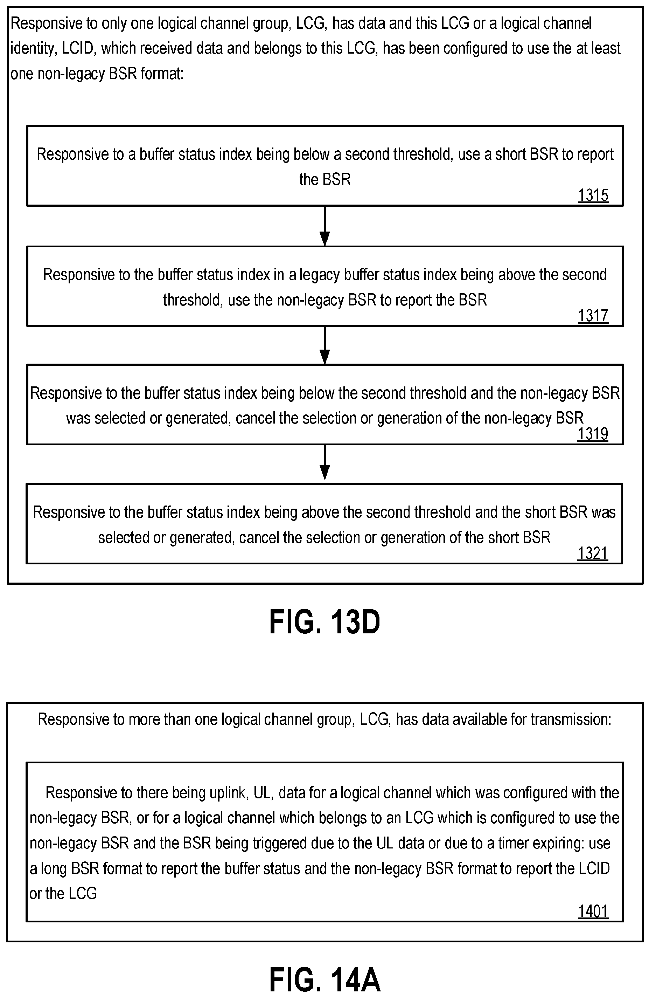

Turning to FIG. 13D, in block 1315, in generating the BSR report, the processing circuitry 403, responsive to only one logical channel group, LCG, has data and this LCG or a logical channel identity, LCID, which received data and belongs to this LCG, has been configured to use a non-legacy BSR format and responsive to a buffer status index being below a second threshold, uses a short BSR to report the BSR. Responsive to only one logical channel group, LCG, has data and this LCG or a logical channel identity, LCID, which received data and belongs to this LCG, has been configured to use a non-legacy BSR format and responsive to the buffer status index being above the second threshold, the processing circuitry 403 in block 1317 uses the non-legacy BSR format to report the BSR.

In some embodiments, the processing circuitry 403 may have previously selected the non-legacy BSR to use or generated a BSR using the non-legacy BSR. Responsive to the buffer status index being below the second threshold and the non-legacy BSR was selected or generated, the processing circuitry 403 in block 1319 cancels the selection or generation of the non-legacy BSR.

In some embodiments, the processing circuitry 403 may also use the short BSR when using the non-legacy BSR.

In other embodiments, the processing circuitry 403 may have previously selected the non-legacy BSR to use or generated a BSR using the non-legacy BSR when the non-legacy BSR is to be used. The processing circuitry 403, responsive to the buffer status index being above the first threshold and the short BSR was selected or generated, cancels the selection or generation of the short BSR in block 1321.

FIGS. 14A - 14F illustrate various embodiments of inventive concepts when there is more than one logical channel group, LCG, has data available for transmission. Turning to FIG. 14A, in block 1401, the processing circuitry 403, responsive to there being uplink, UL, data for a logical channel which was configured with the non-legacy BSR, or for a logical channel which belongs to an LCG which is configured to use the non-legacy BSR and the BSR being triggered due to the UL data or due to a timer expiring, uses a long BSR format to report a buffer status and the non-legacy BSR format to report the LCID or the LCG with triggered the BSR.

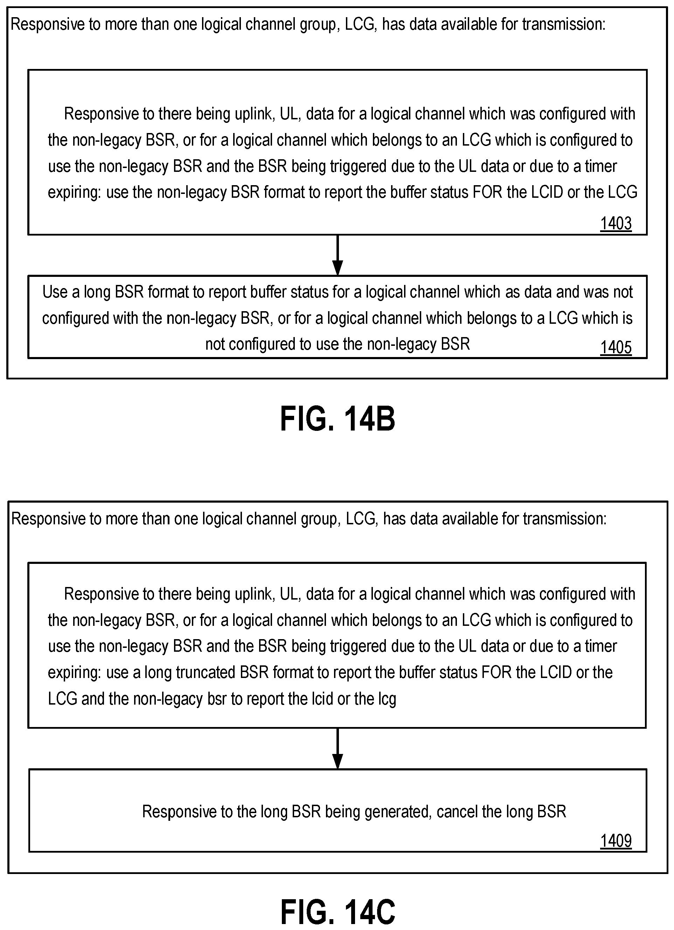

Turning to FIG. 14B, in block 1403, the processing circuitry 403, responsive to there being uplink, UL, data for a logical channel which was configured with the non-legacy BSR, or for a logical channel which belongs to an LCG which is configured to use the non-legacy BSR and the BSR being triggered due to the UL data or due to a timer expiring, uses the non-legacy BSR format to report a buffer status for all LCIDs or LCGs configured to use the non-legacy BSR format. In block 1405, the processing circuitry 402 uses legacy BSR such as the long BSR format for LCIDs or LCGs that have data and that are not configured to use the non-legacy BSR format.

In other embodiments, a long truncated BSR format is used to report the buffer status. Turning to FIG. 14C, in block 1407, the processing circuitry 403, responsive to there being uplink, UL, data for a logical channel which was configured with the non-legacy BSR, or for a logical channel which belongs to an LCG which is configured to use the non-legacy BSR and the BSR being triggered due to the UL data or due to a timer expiring, uses a long truncated BSR format to report the buffer status for the LCID or LCG and the non-legacy BSR to report the LCID or LCG.

In block 1409, responsive to the long BSR being generated, cancels the long BSR.

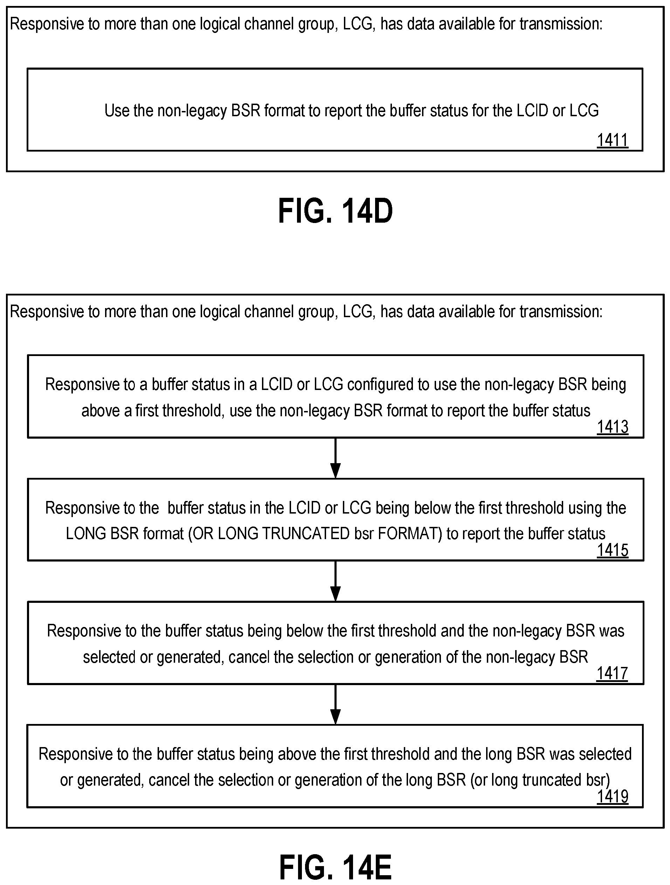

Turning to FIG. 14D, responsive to more than one logical channel group, LCG, has data available for transmission, the processing circuitry 403 in block 1411 uses the non-legacy BSR format to report a buffer status for the LCID or LCG. In some embodiments, the processing circuitry 403 uses the non-legacy BSR to report a buffer status for any other LCID or LCG that has data and is configured to use the non-legacy BSR.

Turning to FIG. 14E, in block 1413, responsive to more than one logical channel group, LCG, has data available for transmission and responsive to a buffer status in a LCID or LCG configured to use the non-legacy BSR being above a first threshold, uses the non-legacy BSR to report a buffer status for the LCID or LCG. In various other embodiments, the non-legacy BSR and the long BSR is used to report the BSR.

In block 1415, responsive to the buffer status in the LCID or LCG configured to use the non-legacy BSR being below the first threshold, uses the long BSR to report the buffer status. In other embodiments, the processing circuitry 403 uses the long BSR to report the buffer status.

In block 1417, responsive to the buffer status being below the first threshold and the non-legacy BSR was selected or generated, the processing circuitry 403 cancels the selection or generation of the non-legacy BSR. In block 1419, responsive to the buffer status being above the first threshold and the long BSR was selected or generated, the processing circuitry 403 cancels the selection or generation of the long BSR (or the long truncated BSR).

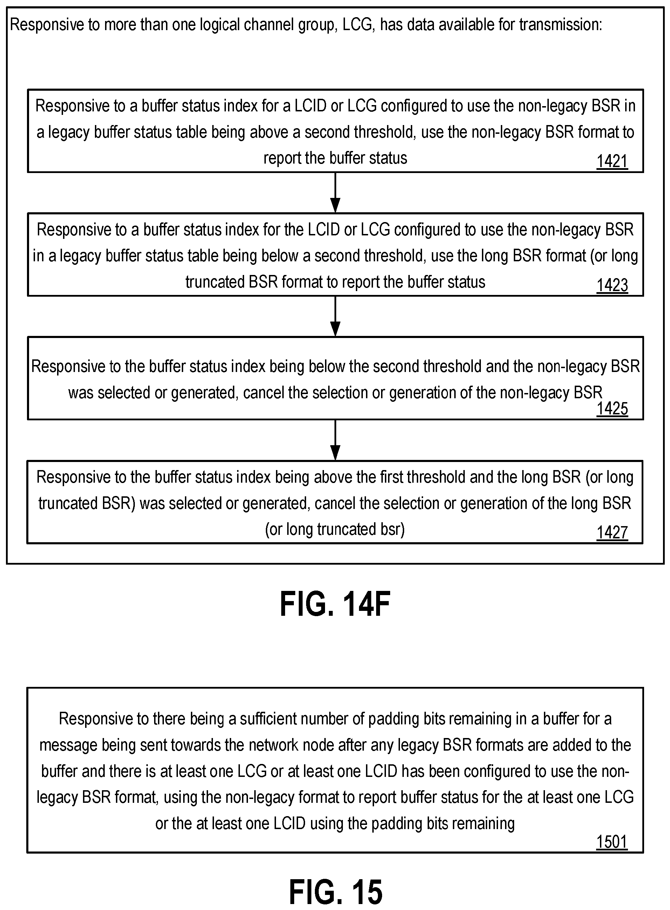

Turning to FIG. 14F, responsive to more than one logical channel group, LCG, has data available for transmission and responsive to a buffer status index for a LCID or LCG configured to use the non-legacy BSR in a legacy buffer status table being above a second threshold, the processing circuitry 403 in block 1421 uses the non-legacy BSR format to report the buffer status. In block 1423, the processing circuitry 403, responsive to more than one logical channel group, LCG, has data available for transmission and responsive to a buffer status index in the legacy buffer status table being below the second threshold, uses the long BSR format to report the buffer status.

In block 1425, responsive to the buffer status index being below the second threshold and the non-legacy BSR was selected or generated, the processing circuitry 403 cancels the selection or generation of the non-legacy BSR. In block 1427, responsive to the buffer status index being above the first threshold and the long BSR was selected or generated, the processing circuitry 403 cancels the long BSR.

In some embodiments, responsive to the buffer status index in the legacy buffer status table being above a second threshold, uses the non-legacy BSR and a long BSR to report the BSR.

In other embodiments, a long truncated BSR format is used to report the buffer status instead of the long BSR. When this occurs, the processing circuitry 403, responsive to the long BSR being selected or generated, cancels the long BSR.

In various other embodiments of inventive concepts, padding bits may be used in generating the BSR report. Turning to FIG. 15, in block 1501, the processing circuitry 401, responsive to there being a sufficient number of padding bits remaining in a buffer for a message being sent towards the network node after any legacy BSR formats are added to the buffer and there is at least one LCG or at least one LCID has been configured to use the non-legacy BSR format, use the non-legacy format to report buffer status for the at least one LCG or the at least one LCID using the padding bits remaining.

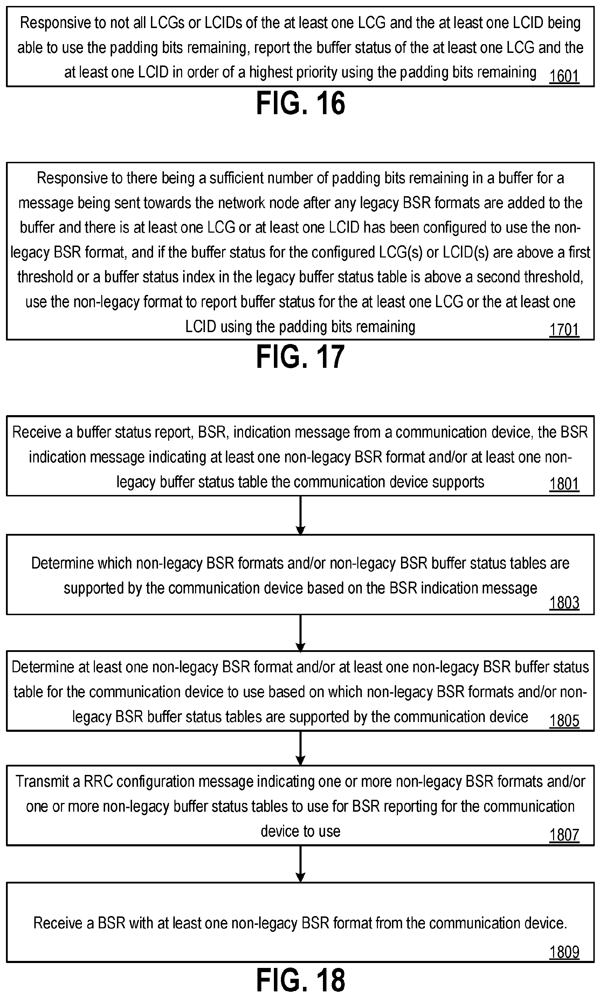

Turning to FIG. 16, in some embodiments, there may not be a sufficient number of padding bits remaining for all of the LCGs and LCIDs that have been configured to use the non-legacy BSR format to use the padding bits remaining. Thus, in block 1601, the processing circuitry 403, responsive to not all LCGs or LCIDs of the at least one LCG and the at least one LCID being able to use the padding bits remaining, reports buffer status of the at least one LCG and the at least one LCID in order of a highest priority using the padding bits remaining.

Turning to FIG. 17, in other embodiments, one or more thresholds are used to determine whether to use the padding bits. In block 1701, the processing circuitry 403, responsive to there being a sufficient number of padding bits remaining in a buffer for a message being sent towards the network node after any legacy BSR formats are added to the buffer and there is at least one LCG or at least one LCID has been configured to use the non-legacy BSR format, and if the buffer status for the configured LCG(s) or LCID(s) are above a first threshold or a buffer status index in the legacy buffer status table is above a second threshold, uses the non-legacy format to report buffer status for the at least one LCG or the at least one LCID using the padding bits remaining.

Operations of a RAN node 500 (implemented using the structure of FIG. 5) will now be discussed with reference to the flow chart of FIG. 18 according to some embodiments of inventive concepts. For example, modules may be stored in memory 505 of FIG. 5, and these modules may provide instructions so that when the instructions of a module are executed by respective RAN node processing circuitry 503, processing circuitry 503 performs respective operations of the flow chart.

Turning to FIG. 18, in block 1801, the processing circuitry 503 receives a buffer status report ("BSR") indication message from a communication device, the BSR indication message indicating at least one non-legacy BSR format and/or at least one non-legacy buffer status table the communication device supports.

In block 1803, the processing circuitry 503 determines which non-legacy BSR formats and/or non-legacy BSR buffer status tables are supported by the communication device based on the BSR indication message. In block 1805, the processing circuitry 503 determines at least one non-legacy BSR format and/or at least one non-legacy BSR buffer status table for the communication device to use based on which non-legacy BSR formats and/or non-legacy BSR buffer status tables are supported by the communication device.

In block 1807, the processing circuitry 503 transmits, via transceiver 501 and/or network interface 507, a radio resource control, RRC, configuration message indicating one or more non-legacy BSR formats and/or one or more non-legacy buffer status tables to use for BSR reporting for the communication device to use. The processing circuitry 503 receives a configuration acknowledgement message from the communication device 200.

Determining the at least one non-legacy BSR format and/or the at least one non-legacy BSR buffer status table can be done by comparing the non-legacy BSR formats and the non-legacy BSR buffer status table the network node supports to the non-legacy BSR formats and the non-legacy BSR buffer status tables the communication device 400 has indicated. If the comparison results in no match, then the RRC configuration message indicates no non-legacy BSR formats and/or non-legacy BSR buffer status tables can be used. Alternatively, the RRC configuration message in such cases may list non-legacy BSR formats and/or non-legacy buffer status tables the network node supports. No match may occur when the network node supports non-legacy BSR formats and/or non-legacy buffer status tables that are different from the non-legacy BSR formats and/or non-legacy buffer status tables.

When there is a match, the network node determines which of the non-legacy BSR formats and/or non-legacy buffer status tables that match that the communication device 200 should use. The network node may specify only one, a few, or all of the matching non-legacy BSR formats and/or non-legacy buffer status tables for the communication device 200 to use.

In block 1809, the processing circuitry 503 receives a BSR with at least one non-legacy BSR format from the communication device 200.

Various operations from the flow chart of FIG. 18 may be optional with respect to some embodiments of RAN nodes and related methods. Regarding methods of example embodiment 37(set forth below), for example, operations of block 1809 of FIG. 18 may be optional.

### EXAMPLE EMBODIMENTS

Example embodiments are discussed below.

Embodiment 1. A method performed by a communication device in a network, the method comprising:
receiving (1101) a BSR format configuration specifying at least one non-legacy BSR format and/or non-legacy buffer status table to use for reporting BSR to a network node;
selecting (1103) at least one non-legacy BSR format and/or at least one non-legacy buffer status table from a group of non-legacy BSR formats;
generating (1105) a BSR report based on the at least one non-legacy BSR format and/or non-legacy buffer status table selected; and
transmitting (1107) the BSR report towards the network node.

Embodiment 2. The method of Embodiment 1 wherein selecting the at least one non-legacy BSR format comprises selecting the at least one non-legacy BSR format from the group of non-legacy BSR formats and at least one legacy BSR format from a group of legacy BSR formats and wherein transmitting the BSR report comprises transmitting a BSR report that includes the at least one non-legacy BSR format from the group of non-legacy BSR formats and the at least one legacy BSR format from the group of legacy BSR formats.

Embodiment 3. The method of any of Embodiments 1-2, further comprising:
transmitting (1201) a buffer status report, BSR, indication message to a network node of the network, the BSR indication message indicating at least one non-legacy BSR format and/or at least one non-legacy buffer status table the communication device supports;
receiving (1203) a configuration message from the network node, the configuration message specifying one or more non-legacy BSR formats and/or one or more non-legacy buffer status tables to use for BSR reporting;
configuring (1205) the communication device for BSR reporting based on the configuration message, thereby creating a BSR reporting configuration.

Embodiment 4. The method of Embodiment 3 wherein the configuration message specifies the one or more non-legacy BSR formats and/or one or more non-legacy buffer status tables to use for BSR reporting for a LCG or LCID.

Embodiment 5. The method of Embodiment 3 wherein the configuration message specifies an LCG or LCID in which the one or more non-legacy BSR formats and/or one or more legacy buffer status tables are to be used.

Embodiment 6. The method of any of Embodiments 1-5, wherein generating the BSR report comprises:
responsive to only one logical channel group, LCG, has data and this LCG or a logical channel identity, LCID, which received data and belongs to this LCG, has been configured to use a non-legacy BSR format:

using (1301) the non-legacy BSR format to generate a BSR report for the LCG or the LCID.

Embodiment 7. The method of Embodiment 6, further comprising:
responsive to the short BSR being selected or generated, canceling (1303) the selection or generation of the short BSR.

Embodiment 8. The method of any of Embodiments 1-5, wherein generating the BSR report comprises:
responsive to only one logical channel group, LCG, has data and this LCG or a logical channel identity, LCID, which received data and belongs to this LCG, has been configured to use a non-legacy BSR format:
using (1305) a short BSR to report the LCG or LCID and using the non-legacy BSR format to report a buffer status of the LCG or LCID.

Embodiment 9. The method of any of Embodiments 1-5, wherein generating the BSR report comprises:
responsive to only one logical channel group, LCG, has data and this LCG or a logical channel identity, LCID, which received data and belongs to this LCG, has been configured to use a non-legacy BSR format:
responsive to a buffer status being below a first threshold, using (1307) a short BSR to report the BSR; and
responsive to the buffer status being above the first threshold, using (1309) the non-legacy BSR to report the BSR.

Embodiment 10. The method of Embodiment 9, further comprising:
responsive to the buffer status being below the first threshold and the non-legacy BSR was selected or generated, canceling (1311) the selection or generation of the non-legacy BSR.

Embodiment 11. The method of any of Embodiments 9-10, wherein using the non-legacy BSR comprises using the non-legacy BSR and the short BSR to report the BSR.

Embodiment 12. The method of any of Embodiments 9-10, further comprising:
responsive to the buffer status being above the first threshold and the short BSR was selected or generated, canceling (1313) the selection or generation of the short BSR.

Embodiment 13. The method of any of Embodiments 1-5, wherein generating the BSR report comprises:
responsive to only one logical channel group, LCG, has data and this LCG or a logical channel identity, LCID, which received data and belongs to this LCG, has been configured to use a non-legacy BSR format:
responsive to a buffer status index being below a second threshold, using (1315) a short BSR to report the BSR; and
responsive to the buffer status index in a legacy buffer status index being above the second threshold; using (1317) the non-legacy BSR format to report the BSR.

Embodiment 14. The method of Embodiment 13, further comprising:
responsive to the buffer status index being below the second threshold and the non-legacy BSR was selected or generated, canceling (1319) the selection or generation of the non-legacy BSR.

Embodiment 15. The method of any of Embodiments 13-14, wherein using the non-legacy BSR comprises using the non-legacy BSR and the short BSR to report the BSR.

Embodiment 16. The method of any of Embodiments 12-14, further comprising:
responsive to the buffer status index being above the first threshold and the short BSR was selected or generated, canceling (1321) the selection or generation of the short BSR.

Embodiment 17. The method of any of Embodiments 1-16, wherein generating the BSR report comprises:
responsive to more than one logical channel group, LCG, has data available for transmission:
responsive to there being uplink, UL, data for a logical channel which was configured with the non-legacy BSR, or for a logical channel which belongs to an LCG which is configured to use the non-legacy BSR and the BSR being triggered due to the UL data or due to a timer expiring:
using (1401) a long BSR format to report a buffer status and the non-legacy BSR format to report the LCID or the LCG.

Embodiment 18. The method of any of Embodiments 1-16, wherein generating the BSR report comprises:
responsive to more than one logical channel group, LCG, has data available for transmission:
responsive to there being uplink, UL, data for a logical channel which was configured with the non-legacy BSR, or for a logical channel which belongs to an LCG which is configured to use the non-legacy BSR and the BSR being triggered due to the UL data or due to a timer expiring:
using (1403) the non-legacy BSR format to report a buffer status for the LCID or the LCG.;and
using (1405) the long BSR format to report buffer status for a logical channel which has data and was not configured with the non-legacy BSR, or for a logical channel which has data and belongs to an LCG which is not configured to use the non-legacy BSR.

Embodiment 19. The method of any of Embodiments 1-16, wherein generating the BSR report comprises:
responsive to more than one logical channel group, LCG, has data available for transmission:
responsive to there being uplink, UL, data for a logical channel which was configured with the non-legacy BSR, or for a logical channel which belongs to an LCG which is configured to use the non-legacy BSR and the BSR being triggered due to the UL data or due to a timer expiring:
using (1407) a long truncated BSR format to report a buffer status and the non-legacy BSR format to report the LCID or the LCG.

Embodiment 20. The method of Embodiment 19, further comprising:
responsive to the long BSR being generated, canceling (1409) the long BSR.

Embodiment 21. The method of any of Embodiments 1-16, wherein generating the BSR report comprises:
responsive to more than one logical channel group, LCG, has data available for transmission:
responsive to there being uplink, UL, data for a logical channel which was configured with the non-legacy BSR, or for a logical channel which belongs to an LCG which is configured to use the non-legacy BSR and the BSR being triggered due to the UL data:
using (1411) the non-legacy BSR format to report a buffer status for the LCID or LCG.

Embodiment 22. The method of Embodiment 21, further comprising:
using the non-legacy BSR format to report a buffer status for any other LCID or LCG that has data and is configured to use the non-legacy BSR format.

Embodiment 23. The method of any of Embodiments 1-16, wherein generating the BSR report comprises:
responsive to more than one logical channel group, LCG, has data available for transmission:
responsive to there being uplink, UL, data for a logical channel which was configured with the non-legacy BSR, or for a logical channel which belongs to an LCG which is configured to use the non-legacy BSR and the BSR being triggered due to the UL data:
using (1411) the non-legacy BSR format to report a buffer status for all LCIDs or LCGs configured to use the non-legacy BSR and have data; and
using a long BSR format to report a buffer status for all LCIDs or LCGs that are not configured to use the non-legacy BSR and have data.

Embodiment 24. The method of any of Embodiments 1-16, wherein generating the BSR report comprises:
responsive to more than one logical channel group, LCG, has data available for transmission:
responsive to a buffer status in a LCID or LCG configured to use the non-legacy BSR being above a first threshold, using (1413) the non-legacy BSR to report a buffer status for the LCID or LCG; and
responsive to the buffer status in the LCID or LCG configured to use the non-legacy BSR being below the first threshold, using (1415) a long BSR to report the buffer status.

Embodiment 25. The method of Embodiment 24, further comprising:
responsive to the buffer status being below the first threshold and the non-legacy BSR was selected or generated, canceling (1417) the selection or generation of the non-legacy BSR.

Embodiment 26. The method of any of Embodiments 24-25, wherein using the non-legacy BSR comprises using the non-legacy BSR and the long BSR to report the BSR.

Embodiment 27. The method of any of Embodiments 22-23, further comprising:
responsive to the buffer status being above the first threshold and the long BSR was selected or generated, canceling (1419) the selection or generation of the long BSR.

Embodiment 28. The method of any of Embodiments 1-16, wherein generating the BSR report comprises:
responsive to more than one logical channel group, LCG, has data available for transmission:
responsive to a buffer status in a LCID or LCG configured to use the non-legacy BSR being above a first threshold, using (1413) the non-legacy BSR to report a buffer status for the LCID or LCG; and
responsive to a buffer status in the LCID or LCG configured to use the non-legacy BSR being below the first threshold, using (1415) a long truncated BSR to report the buffer status.

Embodiment 29. The method of Embodiment 28 wherein responsive to a long BSR being generated, canceling (1419) the long BSR.

Embodiment 30. The method of any of Embodiments 1-16, wherein generating the BSR report comprises:
responsive to more than one logical channel group, LCG, has data available for transmission:
responsive to a buffer status index for a LCID or LCG configured to use the non-legacy BSR in a legacy buffer status table being above a second threshold, using (1421) the non-legacy BSR format to report the buffer status; and
responsive to a buffer status index for the LCID or LCG configured to use the non-legacy BSR in a legacy buffer status table being below the second threshold, using (1423) a long BSR format to report the buffer status.

Embodiment 31. The method of Embodiment 30, further comprising:
responsive to the buffer status index being below the second threshold and the non-legacy BSR was selected or generated, canceling (1425) the selection or generation of the non-legacy BSR.

Embodiment 32. The method of any of Embodiments 30-31, wherein using the non-legacy BSR comprises using the non-legacy BSR and the long BSR to report the BSR.

Embodiment 33. The method of any of Embodiments 30-31, further comprising:
responsive to the buffer status index being above the first threshold and the long BSR was selected or generated, canceling (1427) the selection or generation of the long BSR.

Embodiment 34. The method of any of Embodiments 1-16, wherein generating the BSR report comprises:
responsive to more than one logical channel group, LCG, has data available for transmission:
responsive to a buffer status index in a LCID or LCG configured to use the non-legacy BSR being above a second threshold, using (1421) the non-legacy BSR to report a buffer status for the LCID or LCG; and
responsive to a buffer status index in the LCID or LCG configured to use the non-legacy BSR being below the first threshold, using (1423) a long truncated BSR to report the buffer status.

Embodiment 35. The method of Embodiment 34 wherein responsive to a long BSR being generated, canceling (1427) the long BSR.

Embodiment 36. The method of any of Embodiments 1-35, wherein generating a BSR report based on the BSR format and buffer status table selected comprises:
responsive to there being a sufficient number of padding bits remaining in a buffer for a message being sent towards the network node after any legacy BSR formats are added to the buffer and there is at least one LCG or at least one LCID has been configured to use the non-legacy BSR format, using (1501) the non-legacy format to report buffer status for the at least one LCG or the at least one LCID using the padding bits remaining.

Embodiment 37. The method of Embodiment 36 wherein responsive to not all LCGs or LCIDs of the at least one LCG and the at least one LCID being able to use the padding bits remaining, reporting (1601) buffer status of the at least one LCG and the at least one LCID in order of a highest priority using the padding bits remaining.

Embodiment 38. The method of any of Embodiments 1-35, wherein generating a BSR report based on the BSR format and buffer status table selected comprises:
responsive to there being a sufficient number of padding bits remaining in a buffer for a message being sent towards the network node after any legacy BSR formats are added to the buffer and there is at least one LCG or at least one LCID has been configured to use the non-legacy BSR format, and if the buffer status for the configured LCG(s) or LCID(s) are above a first threshold or a buffer status index in the legacy buffer status table is above a second threshold, using (1701) the non-legacy format to report buffer status for the at least one LCG or the at least one LCID using the padding bits remaining.

Embodiment 39. A communication device (400) adapted to perform operations comprising:
receiving (1101) a BSR format configuration specifying at least one non-legacy BSR format and/or non-legacy buffer status table to use for reporting BSR to a network node;
selecting (1103) at least one non-legacy BSR format and/or at least one non-legacy buffer status table from a group of non-legacy BSR formats;
generating (1105) a BSR report based on the at least one non-legacy BSR format and/or non-legacy buffer status table selected; and
transmitting (1107) the BSR report towards the network node.

Embodiment 40. The communication device of Embodiment 39 wherein the communication device is adapted to perform operations according to any of Embodiments 2-38.

Embodiment 41. A communication device (400) comprising:
processing circuitry (403); and
memory (405) coupled with the processing circuitry, wherein the memory includes instructions that when executed by the processing circuitry causes the communication device to perform operations comprising:
   receiving (1101) a BSR format configuration specifying at least one non-legacy BSR format and/or non-legacy buffer status table to use for reporting BSR to a network node;
   selecting (1103) at least one non-legacy BSR format and/or at least one non-legacy buffer status table from a group of non-legacy BSR formats;
   generating (1105) a BSR report based on the at least one non-legacy BSR format and/or non-legacy buffer status table selected; and
   transmitting (1107) the BSR report towards the network node.

Embodiment 42. The communication device (400) of Embodiment 41 wherein in selecting the at least one non-legacy BSR format, the memory includes instructions that when executed by the processing circuitry causes the communication device to perform operations comprising selecting the at least one non-legacy BSR format from the group of non-legacy BSR formats and at least one legacy BSR format from a group of legacy BSR formats and wherein transmitting the BSR report comprises transmitting a BSR report that includes the at least one non-legacy BSR format from the group of non-legacy BSR formats and the at least one legacy BSR format from the group of legacy BSR formats.

Embodiment 43. The communication device (400) of any of Embodiments 41-42, wherein the memory includes instructions that when executed by the processing circuitry causes the communication device to perform operations further comprising:
transmitting (1201) a buffer status report, BSR, indication message to a network node of the network, the BSR indication message indicating at least one non-legacy BSR format and/or at least one non-legacy buffer status table the communication device supports;
receiving (1203) a configuration message from the network node, the configuration message specifying one or more non-legacy BSR formats and/or one or more non-legacy buffer status tables to use for BSR reporting;
configuring (1205) the communication device for BSR reporting based on the configuration message, thereby creating a BSR reporting configuration.

Embodiment 44. The communication device (400) of Embodiment 43 wherein the configuration message specifies the one or more non-legacy BSR formats and/or one or more non-legacy buffer status tables to use for BSR reporting for a LCG or LCID.

Embodiment 45. The communication device (400) of Embodiment 43 wherein the configuration message specifies an LCG or LCID in which the one or more non-legacy BSR formats and/or one or more legacy buffer status tables are to be used.

Embodiment 46. The communication device (400) of any of Embodiments 41-45, wherein in generating the BSR report, the memory includes instructions that when executed by the processing circuitry causes the communication device to perform operations comprising:
responsive to only one logical channel group, LCG, has data and this LCG or a logical channel identity, LCID, which received data and belongs to this LCG, has been configured to use a non-legacy BSR format:
using (1301) the non-legacy BSR format to generate a BSR report for the data of the LCG or the LCID which triggered the BSR report.

Embodiment 47. The communication device (400) of Embodiment 46, further comprising:
responsive to the short BSR being selected or generated, canceling (1303) the selection or generation of the short BSR.

Embodiment 48. The communication device (400) of any of Embodiments 41-45, wherein in generating the BSR report, the memory includes instructions that when executed by the processing circuitry causes the communication device to perform operations comprising:
responsive to only one logical channel group, LCG, has data and this LCG or a logical channel identity, LCID, which received data and belongs to this LCG, has been configured to use a non-legacy BSR format:
using (1305) a short BSR to report the LCG and using the non-legacy BSR format to report a buffer status of the LCID.

Embodiment 49. The communication device (400) of any of Embodiments 41-45, wherein in generating the BSR report, the memory includes instructions that when executed by the processing circuitry causes the communication device to perform operations comprising:
responsive to only one logical channel group, LCG, has data and this LCG or a logical channel identity, LCID, which received data and belongs to this LCG, has been configured to use a non-legacy BSR format:
responsive to a buffer status being below a first threshold, using (1307) a short BSR to report the BSR; and
responsive to the buffer status being above the first threshold, using (1309) the non-legacy BSR to report the BSR.

Embodiment 50. The communication device (400) of Embodiment 49, wherein the memory includes further instructions that when executed by the processing circuitry causes the communication device to perform operations further comprising:
responsive to the buffer status being below the first threshold and the non-legacy BSR was selected or generated, canceling (1311) the selection or generation of the non-legacy BSR.

Embodiment 51. The communication device (400) of any of Embodiments 49-50, wherein in using the non-legacy BSR, the memory includes instructions that when executed by the processing circuitry causes the communication device to perform operations comprising using the non-legacy BSR and the short BSR to report the BSR.

Embodiment 52. The communication device (400) of any of Embodiments 49-50, wherein the memory includes further instructions that when executed by the processing circuitry causes the communication device to perform operations further comprising:
responsive to the buffer status being above the first threshold and the short BSR was selected or generated, canceling (1313) the selection or generation of the short BSR.

Embodiment 53. The communication device (400) of any of Embodiments 41-45, wherein in generating the BSR report, the memory includes instructions that when executed by the processing circuitry causes the communication device to perform operations comprising:
responsive to only one logical channel group, LCG, has data and this LCG or a logical channel identity, LCID, which received data and belongs to this LCG, has been configured to use a non-legacy BSR format:
responsive to a buffer status index being below a second threshold, using (1315) a short BSR to report the BSR; and
responsive to the buffer status index in a legacy buffer status index is above the second threshold; using (1317) the non-legacy BSR format to report the BSR.

Embodiment 54. The communication device (400) of Embodiment 53, wherein the memory includes further instructions that when executed by the processing circuitry causes the communication device to perform operations further comprising:
responsive to the buffer status index being below the second threshold and the non-legacy BSR was selected or generated, canceling (1319) the selection or generation of the non-legacy BSR.

Embodiment 55. The communication device (400) of any of Embodiments 53-54, wherein in using the non-legacy BSR, the memory includes instructions that when executed by the processing circuitry causes the communication device to perform operations comprising using the non-legacy BSR and the short BSR to report the BSR.

Embodiment 56. The communication device (400) of any of Embodiments 53-54, wherein the memory includes further instructions that when executed by the processing circuitry causes the communication device to perform operations further comprising:
responsive to the buffer status index being above the first threshold and the short BSR was selected or generated, canceling (1321) the selection or generation of the short BSR.

Embodiment 57. The communication device (400) of any of Embodiments 41-56, wherein in generating the BSR report, the memory includes instructions that when executed by the processing circuitry causes the communication device to perform operations comprising:
responsive to more than one logical channel group, LCG, has data available for transmission:
responsive to there being uplink, UL, data for a logical channel which was configured with the non-legacy BSR, or for a logical channel which belongs to an LCG which is configured to use the non-legacy BSR and the BSR being triggered due to the UL data or due to a timer expiring:
using (1401) a long BSR format to report a buffer status and the non-legacy BSR format to report the LCID or the LCG which triggered the BSR.

Embodiment 58. The communication device (400) of any of Embodiments 41-56, wherein in generating the BSR report, the memory includes instructions that when executed by the processing circuitry causes the communication device to perform operations comprising:
responsive to more than one logical channel group, LCG, has data available for transmission:
responsive to there being uplink, UL, data for a logical channel which was configured with the non-legacy BSR, or for a logical channel which belongs to an LCG which is configured to use the non-legacy BSR and the BSR being triggered due to the UL data or due to a timer expiring:
using (1403) the non-legacy BSR format to report a buffer status and the LCID or the LCG with triggered the BSR.;and
using (1405) the long BSR format to report buffer status for a logical channel which was not configured with the non-legacy BSR, or for a logical channel which belongs to an LCG which is not configured to use the non-legacy BSR.

Embodiment 59. The communication device (400) of any of Embodiments 41-56, wherein in generating the BSR report, the memory includes instructions that when executed by the processing circuitry causes the communication device to perform operations comprising:
responsive to more than one logical channel group, LCG, has data available for transmission:
responsive to there being uplink, UL, data for a logical channel which was configured with the non-legacy BSR, or for a logical channel which belongs to an LCG which is configured to use the non-legacy BSR and the BSR being triggered due to the UL data or due to a timer expiring:
using (1407) a long truncated BSR format to report a buffer status and the non-legacy BSR format to report the LCID or the LCG.

Embodiment 60. The communication device (400) of Embodiment 59, wherein the memory includes further instructions that when executed by the processing circuitry causes the communication device to perform operations further comprising: responsive to the long BSR being generated, canceling (1409) the long BSR.

Embodiment 61. The method of any of Embodiments 41-46, wherein in generating the BSR report, the memory includes instructions that when executed by the processing circuitry causes the communication device to perform operations comprising:
responsive to more than one logical channel group, LCG, has data available for transmission:
using (1411) the non-legacy BSR format to report a buffer status for the LCID or LCG.

Embodiment 62. The method of Embodiment 61, further comprising:
using the non-legacy BSR format to report a buffer status for any other LCID or LCG that has data and is configured to use the non-legacy BSR format.

Embodiment 63. The method of any of Embodiments 41-46, wherein generating the BSR report comprises:
responsive to more than one logical channel group, LCG, has data available for transmission:
responsive to there being uplink, UL, data for a logical channel which was configured with the non-legacy BSR, or for a logical channel which belongs to an LCG which is configured to use the non-legacy BSR and the BSR being triggered due to the UL data:
using (1411) the non-legacy BSR format to report a buffer status for all LCIDs or LCGs configured to use the non-legacy BSR and have data; and
using a long BSR format to report a buffer status for all LCIDs or LCGs that are not configured to use the non-legacy BSR and have data.

Embodiment 64. The method of any of Embodiments 41-46, wherein in generating the BSR report, the memory includes instructions that when executed by the processing circuitry causes the communication device to perform operations comprising:
responsive to more than one logical channel group, LCG, has data available for transmission:
responsive to a buffer status in a LCID or LCG configured to use the non-legacy BSR being above a first threshold, using (1413) the non-legacy BSR to report a buffer status for the LCID or LCG; and
responsive to a buffer status in the LCID or LCG configured to use the non-legacy BSR being below the first threshold, using (1415) a long BSR to report the buffer status.

Embodiment 65. The communication device (400) of Embodiment 64 wherein the memory includes further instructions that when executed by the processing circuitry causes the communication device to perform operations further comprising:
responsive to the buffer status being below the first threshold and the non-legacy BSR was selected or generated, canceling (1417) the selection or generation of the non-legacy BSR.

Embodiment 66. The communication device (400) of any of Embodiments 64-65, wherein in using the non-legacy BSR, the memory includes instructions that when executed by the processing circuitry causes the communication device to perform operations comprising using the non-legacy BSR and the long BSR to report the BSR.

Embodiment 67. The communication device (400) of any of Embodiments 64-65, wherein the memory includes further instructions that when executed by the processing circuitry causes the communication device to perform operations further comprising:
responsive to the buffer status being above the first threshold and the long BSR was selected or generated, canceling (1419) the selection or generation of the long BSR.

Embodiment 68. The communication device (400) of any of Embodiments 41-46, wherein in generating the BSR report, the memory includes instructions that when executed by the processing circuitry causes the communication device to perform operations comprising:
responsive to more than one logical channel group, LCG, has data available for transmission:
responsive to a buffer status in a LCID or LCG configured to use the non-legacy BSR being above a first threshold, using (1413) the non-legacy BSR to report a buffer status for the LCID or LCG; and
responsive to a buffer status in the LCID or LCG configured to use the non-legacy BSR being below the first threshold, using (1415) a long truncated BSR to report the buffer status.

Embodiment 69. The communication device (400) of Embodiment 67 wherein the memory includes further instructions that when executed by the processing circuitry causes the communication device to perform operations further comprising responsive to a long BSR being generated, canceling (1419) the long BSR.

Embodiment 70. The communication device (400) of any of Embodiments 41-46, wherein in generating the BSR report, the memory includes instructions that when executed by the processing circuitry causes the communication device to perform operations comprising:
responsive to more than one logical channel group, LCG, has data available for transmission:
responsive to a buffer status index for a LCID or LCG configured to use the non-legacy BSR in a legacy buffer status table being above a second threshold, using (1421) the non-legacy BSR format to report the buffer status; and
responsive to a buffer status index for the LCID or LCG configured to use the non-legacy BSR in a legacy buffer status table being below the second threshold, using (1423) the long BSR format to report the buffer status.

Embodiment 71. The communication device (400) of Embodiment 70, wherein the memory includes further instructions that when executed by the processing circuitry causes the communication device to perform operations further comprising:
responsive to the buffer status index being below the second threshold and the non-legacy BSR was selected or generated, canceling (1425) the selection or generation of the non-legacy BSR.

Embodiment 72. The communication device (400) of any of Embodiments 70-71, wherein in using the non-legacy BSR, the memory includes instructions that when executed by the processing circuitry causes the communication device to perform operations comprising using the non-legacy BSR and the long BSR to report the BSR.

Embodiment 73. The communication device (400) of any of Embodiments 70-71, wherein the memory includes further instructions that when executed by the processing circuitry causes the communication device to perform operations further comprising:
responsive to the buffer status index being above the first threshold and the long BSR was selected or generated, canceling (1427) the selection or generation of the long BSR.

Embodiment 74. The communication device (400) of any of Embodiments 41-46, wherein in generating the BSR report, the memory includes instructions that when executed by the processing circuitry causes the communication device to perform operations comprising:
responsive to more than one logical channel group, LCG, has data available for transmission:
responsive to a buffer status index in a LCID or LCG configured to use the non-legacy BSR being above a first threshold, using (1421) the non-legacy BSR to report a buffer status for the LCID or LCG; and
responsive to a buffer status index in the LCID or LCG configured to use the non-legacy BSR being below the first threshold, using (1423) a long truncated BSR to report the buffer status.

Embodiment 75. The communication device (400) of Embodiment 74, wherein the memory includes further instructions that when executed by the processing circuitry causes the communication device to perform operations further comprising responsive to a long BSR being generated, canceling (1427) the long BSR.

Embodiment 76. The communication device (400) of any of Embodiments 41-75, wherein in generating the BSR report based on the BSR format and buffer status table selected, the memory includes instructions that when executed by the processing circuitry causes the communication device to perform operations comprising:
responsive to there being a sufficient number of padding bits remaining in a buffer for a message being sent towards the network node after any legacy BSR formats are added to the buffer and there is at least one LCG or at least one LCID has been configured to use the non-legacy BSR format, using (1501) the non-legacy format to report buffer status for the at least one LCG or the at least one LCID using the padding bits remaining.

Embodiment 77. The communication device (400) of Embodiment 76 wherein the memory includes further instructions that when executed by the processing circuitry causes the communication device to perform operations further comprising responsive to not all LCGs or LCIDs of the at least one LCG and the at least one LCID being able to use the padding bits remaining, reporting (1601) buffer status of the at least one LCG and the at least one LCID in order of a highest priority using the padding bits remaining.

Embodiment 78. The communication device (400) of any of Embodiments 41-75, wherein in generating a BSR report based on the BSR format and buffer status table selected, the memory includes instructions that when executed by the processing circuitry causes the communication device to perform operations comprising:
responsive to there being a sufficient number of padding bits remaining in a buffer for a message being sent towards the network node after any legacy BSR formats are added to the buffer and there is at least one LCG or at least one LCID has been configured to use the non-legacy BSR format, and if the buffer status for the configured LCG(s) or LCID(s) are above a first threshold or a buffer status index in the legacy buffer status table is above a second threshold, using (1701) the non-legacy format to report buffer status for the at least one LCG or the at least one LCID using the padding bits remaining.

Embodiment 79. A computer program comprising program code to be executed by processing circuitry (403) of a communication device (400), whereby execution of the program code causes the communication device (400) to perform operations according to any of embodiments 1-38.

Embodiment 80. A computer program product comprising a non-transitory storage medium including program code to be executed by processing circuitry (403) of a communication device (400), whereby execution of the program code causes the communication device (400) to perform operations according to any of embodiments 1-38.

Embodiment 81. A method performed by a network node in a network, the method comprising:
receiving (1801) a buffer status report, BSR, indication message from a communication device, the BSR indication message indicating at least one non-legacy BSR format and/or at least one non-legacy buffer status table the communication device supports;
determining (1803) which non-legacy BSR formats and/or non-legacy BSR buffer status tables are supported by the communication device based on the BSR indication message;
determining (1805) at least one non-legacy BSR format and/or at least one non-legacy BSR buffer status table for the communication device to use based on which non-legacy BSR formats and/or non-legacy BSR buffer status tables are supported by the communication device; and
transmitting (1807) a radio resource control, RRC, configuration message indicating one or more non-legacy BSR formats and/or one or more non-legacy buffer status tables to use for BSR reporting for the communication device to use.

Embodiment 82. The method of Embodiment 81, further comprising:
receiving a configuration acknowledgement message.

Embodiment 83. The method of any of Embodiments 81-82, further comprising:
receiving (1809) a BSR with at least one non-legacy BSR format from the communication device.

Embodiment 84. A radio access network, RAN, node (500) adapted to perform operations comprising:
receiving (1801) a buffer status report, BSR, indication message from a communication device, the BSR indication message indicating at least one non-legacy BSR format and/or at least one non-legacy buffer status table the communication device supports;
determining (1803) which non-legacy BSR formats and/or non-legacy BSR buffer status tables are supported by the communication device based on the BSR indication message
determining (1805) at least one non-legacy BSR format and/or at least one non-legacy BSR buffer status table for the communication device to use; and
transmitting (1807) a radio resource control, RRC, configuration message indicating one or more non-legacy BSR formats and/or one or more non-legacy buffer status tables to use for BSR reporting for the communication device to use.

Embodiment 85. The RAN node (500) of Embodiment 84 wherein the RAN node is further adapted to perform operations according to any of Embodiments 82-83.

Embodiment 86. A radio access network, RAN, node (500) comprising:
processing circuitry (503); and
memory (505) coupled with the processing circuitry, wherein the memory includes instructions that when executed by the processing circuitry causes the RAN node to perform operations comprising:
   receiving (1801) a buffer status report, BSR, indication message from a communication device, the BSR indication message indicating at least one non-legacy BSR format and/or at least one non-legacy buffer status table the communication device supports;
   determining (1803) which non-legacy BSR formats and/or non-legacy BSR buffer status tables are supported by the communication device based on the BSR indication message;
   determining (1805) at least one non-legacy BSR format and/or at least one non-legacy BSR buffer status table for the communication device to use; and
   transmitting (1807) a radio resource control, RRC, configuration message indicating one or more non-legacy BSR formats and/or one or more non-legacy buffer status tables to use for BSR reporting for the communication device to use.

Embodiment 87. The RAN node (500) of Embodiment 86 wherein the memory includes further instructions that when executed by the processing circuitry causes the RAN node to perform operations further comprising:
receiving a configuration acknowledgement message.

Embodiment 88. The RAN node (500) of any of Embodiments 86-87, wherein the memory includes further instructions that when executed by the processing circuitry causes the RAN node to perform operations further comprising:
receiving (1809) a BSR with at least one non-legacy BSR format from the communication device.

Embodiment 89. A computer program comprising program code to be executed by processing circuitry (503) of a radio access network, RAN, node (500), whereby execution of the program code causes the RAN node (500) to perform operations according to any of embodiments 81-83.

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

FIG. 19 illustrates a wireless network in accordance with some embodiments.

Although the subject matter described herein may be implemented in any appropriate type of system using any suitable components, the embodiments disclosed herein are described in relation to a wireless network, such as the example wireless network illustrated in FIG. 19. For simplicity, the wireless network of FIG. 19 only depicts network 4106, network nodes 4160 and 4160b, and WDs 4110, 4110b, and 4110c (also referred to as mobile terminals). In practice, a wireless network may further include any additional elements suitable to support communication between wireless devices or between a wireless device and another communication device, such as a landline telephone, a service provider, or any other network node or end device. Of the illustrated components, network node 4160 and wireless device (WD) 4110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 4106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 4160 and WD 4110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIG. 19, network node 4160 includes processing circuitry 4170, device readable medium 4180, interface 4190, auxiliary equipment 4184, power source 4186, power circuitry 4187, and antenna 4162. Although network node 4160 illustrated in the example wireless network of FIG. 19 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 4160 are depicted as single boxes located within a larger box, or nested within multiple boxes, in practice, a network node may comprise multiple different physical components that make up a single illustrated component (e.g., device readable medium 4180 may comprise multiple separate hard drives as well as multiple RAM modules).

Similarly, network node 4160 may be composed of multiple physically separate components (e.g., a NodeB component and a RNC component, or a BTS component and a BSC component, etc.), which may each have their own respective components. In certain scenarios in which network node 4160 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, network node 4160 may be configured to support multiple radio access technologies (RATs). In such embodiments, some components may be duplicated (e.g., separate device readable medium 4180 for the different RATs) and some components may be reused (e.g., the same antenna 4162 may be shared by the RATs). Network node 4160 may also include multiple sets of the various illustrated components for different wireless technologies integrated into network node 4160, such as, for example, GSM, WCDMA, LTE, NR, WiFi, or Bluetooth wireless technologies. These wireless technologies may be integrated into the same or different chip or set of chips and other components within network node 4160.

Processing circuitry 4170 is configured to perform any determining, calculating, or similar operations (e.g., certain obtaining operations) described herein as being provided by a network node. These operations performed by processing circuitry 4170 may include processing information obtained by processing circuitry 4170 by, for example, converting the obtained information into other information, comparing the obtained information or converted information to information stored in the network node, and/or performing one or more operations based on the obtained information or converted information, and as a result of said processing making a determination.

Processing circuitry 4170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 4160 components, such as device readable medium 4180, network node 4160 functionality. For example, processing circuitry 4170 may execute instructions stored in device readable medium 4180 or in memory within processing circuitry 4170. Such functionality may include providing any of the various wireless features, functions, or benefits discussed herein. In some embodiments, processing circuitry 4170 may include a system on a chip (SOC).

In some embodiments, processing circuitry 4170 may include one or more of radio frequency (RF) transceiver circuitry 4172 and baseband processing circuitry 4174. In some embodiments, radio frequency (RF) transceiver circuitry 4172 and baseband processing circuitry 4174 may be on separate chips (or sets of chips), boards, or units, such as radio units and digital units. In alternative embodiments, part or all of RF transceiver circuitry 4172 and baseband processing circuitry 4174 may be on the same chip or set of chips, boards, or units

In certain embodiments, some or all of the functionality described herein as being provided by a network node, base station, eNB or other such network device may be performed by processing circuitry 4170 executing instructions stored on device readable medium 4180 or memory within processing circuitry 4170. In alternative embodiments, some or all of the functionality may be provided by processing circuitry 4170 without executing instructions stored on a separate or discrete device readable medium, such as in a hard-wired manner. In any of those embodiments, whether executing instructions stored on a device readable storage medium or not, processing circuitry 4170 can be configured to perform the described functionality. The benefits provided by such functionality are not limited to processing circuitry 4170 alone or to other components of network node 4160, but are enjoyed by network node 4160 as a whole, and/or by end users and the wireless network generally.

Device readable medium 4180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 4170. Device readable medium 4180 may store any suitable instructions, data or information, including a computer program, software, an application including one or more of logic, rules, code, tables, etc. and/or other instructions capable of being executed by processing circuitry 4170 and, utilized by network node 4160. Device readable medium 4180 may be used to store any calculations made by processing circuitry 4170 and/or any data received via interface 4190. In some embodiments, processing circuitry 4170 and device readable medium 4180 may be considered to be integrated.

Interface 4190 is used in the wired or wireless communication of signalling and/or data between network node 4160, network 4106, and/or WDs 4110. As illustrated, interface 4190 comprises port(s)/terminal(s) 4194 to send and receive data, for example to and from network 4106 over a wired connection. Interface 4190 also includes radio front end circuitry 4192 that may be coupled to, or in certain embodiments a part of, antenna 4162. Radio front end circuitry 4192 comprises filters 4198 and amplifiers 4196. Radio front end circuitry 4192 may be connected to antenna 4162 and processing circuitry 4170. Radio front end circuitry may be configured to condition signals communicated between antenna 4162 and processing circuitry 4170. Radio front end circuitry 4192 may receive digital data that is to be sent out to other network nodes or WDs via a wireless connection. Radio front end circuitry 4192 may convert the digital data into a radio signal having the appropriate channel and bandwidth parameters using a combination of filters 4198 and/or amplifiers 4196. The radio signal may then be transmitted via antenna 4162. Similarly, when receiving data, antenna 4162 may collect radio signals which are then converted into digital data by radio front end circuitry 4192. The digital data may be passed to processing circuitry 4170. In other embodiments, the interface may comprise different components and/or different combinations of components.

In certain alternative embodiments, network node 4160 may not include separate radio front end circuitry 4192, instead, processing circuitry 4170 may comprise radio front end circuitry and may be connected to antenna 4162 without separate radio front end circuitry 4192. Similarly, in some embodiments, all or some of RF transceiver circuitry 4172 may be considered a part of interface 4190. In still other embodiments, interface 4190 may include one or more ports or terminals 4194, radio front end circuitry 4192, and RF transceiver circuitry 4172, as part of a radio unit (not shown), and interface 4190 may communicate with baseband processing circuitry 4174, which is part of a digital unit (not shown).

Antenna 4162 may include one or more antennas, or antenna arrays, configured to send and/or receive wireless signals. Antenna 4162 may be coupled to radio front end circuitry 4192 and may be any type of antenna capable of transmitting and receiving data and/or signals wirelessly. In some embodiments, antenna 4162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 4162 may be separate from network node 4160 and may be connectable to network node 4160 through an interface or port.

Antenna 4162, interface 4190, and/or processing circuitry 4170 may be configured to perform any receiving operations and/or certain obtaining operations described herein as being performed by a network node. Any information, data and/or signals may be received from a wireless device, another network node and/or any other network equipment. Similarly, antenna 4162, interface 4190, and/or processing circuitry 4170 may be configured to perform any transmitting operations described herein as being performed by a network node. Any information, data and/or signals may be transmitted to a wireless device, another network node and/or any other network equipment.

Power circuitry 4187 may comprise, or be coupled to, power management circuitry and is configured to supply the components of network node 4160 with power for performing the functionality described herein. Power circuitry 4187 may receive power from power source 4186. Power source 4186 and/or power circuitry 4187 may be configured to provide power to the various components of network node 4160 in a form suitable for the respective components (e.g., at a voltage and current level needed for each respective component). Power source 4186 may either be included in, or external to, power circuitry 4187 and/or network node 4160. For example, network node 4160 may be connectable to an external power source (e.g., an electricity outlet) via an input circuitry or interface such as an electrical cable, whereby the external power source supplies power to power circuitry 4187. As a further example, power source 4186 may comprise a source of power in the form of a battery or battery pack which is connected to, or integrated in, power circuitry 4187. The battery may provide backup power should the external power source fail. Other types of power sources, such as photovoltaic devices, may also be used.

Alternative embodiments of network node 4160 may include additional components beyond those shown in FIG. 19 that may be responsible for providing certain aspects of the network node's functionality, including any of the functionality described herein and/or any functionality necessary to support the subject matter described herein. For example, network node 4160 may include user interface equipment to allow input of information into network node 4160 and to allow output of information from network node 4160. This may allow a user to perform diagnostic, maintenance, repair, and other administrative functions for network node 4160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 4110 includes antenna 4111, interface 4114, processing circuitry 4120, device readable medium 4130, user interface equipment 4132, auxiliary equipment 4134, power source 4136 and power circuitry 4137. WD 4110 may include multiple sets of one or more of the illustrated components for different wireless technologies supported by WD 4110, such as, for example, GSM, WCDMA, LTE, NR, WiFi, WiMAX, or Bluetooth wireless technologies, just to mention a few. These wireless technologies may be integrated into the same or different chips or set of chips as other components within WD 4110.

Antenna 4111 may include one or more antennas or antenna arrays, configured to send and/or receive wireless signals, and is connected to interface 4114. In certain alternative embodiments, antenna 4111 may be separate from WD 4110 and be connectable to WD 4110 through an interface or port. Antenna 4111, interface 4114, and/or processing circuitry 4120 may be configured to perform any receiving or transmitting operations described herein as being performed by a WD. Any information, data and/or signals may be received from a network node and/or another WD. In some embodiments, radio front end circuitry and/or antenna 4111 may be considered an interface.

As illustrated, interface 4114 comprises radio front end circuitry 4112 and antenna 4111. Radio front end circuitry 4112 comprise one or more filters 4118 and amplifiers 4116. Radio front end circuitry 4112 is connected to antenna 4111 and processing circuitry 4120, and is configured to condition signals communicated between antenna 4111 and processing circuitry 4120. Radio front end circuitry 4112 may be coupled to or a part of antenna 4111. In some embodiments, WD 4110 may not include separate radio front end circuitry 4112; rather, processing circuitry 4120 may comprise radio front end circuitry and may be connected to antenna 4111. Similarly, in some embodiments, some or all of RF transceiver circuitry 4122 may be considered a part of interface 4114. Radio front end circuitry 4112 may receive digital data that is to be sent out to other network nodes or WDs via a wireless connection. Radio front end circuitry 4112 may convert the digital data into a radio signal having the appropriate channel and bandwidth parameters using a combination of filters 4118 and/or amplifiers 4116. The radio signal may then be transmitted via antenna 4111. Similarly, when receiving data, antenna 4111 may collect radio signals which are then converted into digital data by radio front end circuitry 4112. The digital data may be passed to processing circuitry 4120. In other embodiments, the interface may comprise different components and/or different combinations of components.

Processing circuitry 4120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 4110 components, such as device readable medium 4130, WD 4110 functionality. Such functionality may include providing any of the various wireless features or benefits discussed herein. For example, processing circuitry 4120 may execute instructions stored in device readable medium 4130 or in memory within processing circuitry 4120 to provide the functionality disclosed herein.

As illustrated, processing circuitry 4120 includes one or more of RF transceiver circuitry 4122, baseband processing circuitry 4124, and application processing circuitry 4126. In other embodiments, the processing circuitry may comprise different components and/or different combinations of components. In certain embodiments processing circuitry 4120 of WD 4110 may comprise a SOC. In some embodiments, RF transceiver circuitry 4122, baseband processing circuitry 4124, and application processing circuitry 4126 may be on separate chips or sets of chips. In alternative embodiments, part or all of baseband processing circuitry 4124 and application processing circuitry 4126 may be combined into one chip or set of chips, and RF transceiver circuitry 4122 may be on a separate chip or set of chips. In still alternative embodiments, part or all of RF transceiver circuitry 4122 and baseband processing circuitry 4124 may be on the same chip or set of chips, and application processing circuitry 4126 may be on a separate chip or set of chips. In yet other alternative embodiments, part or all of RF transceiver circuitry 4122, baseband processing circuitry 4124, and application processing circuitry 4126 may be combined in the same chip or set of chips. In some embodiments, RF transceiver circuitry 4122 may be a part of interface 4114. RF transceiver circuitry 4122 may condition RF signals for processing circuitry 4120.

In certain embodiments, some or all of the functionality described herein as being performed by a WD may be provided by processing circuitry 4120 executing instructions stored on device readable medium 4130, which in certain embodiments may be a computer-readable storage medium. In alternative embodiments, some or all of the functionality may be provided by processing circuitry 4120 without executing instructions stored on a separate or discrete device readable storage medium, such as in a hard-wired manner. In any of those particular embodiments, whether executing instructions stored on a device readable storage medium or not, processing circuitry 4120 can be configured to perform the described functionality. The benefits provided by such functionality are not limited to processing circuitry 4120 alone or to other components of WD 4110, but are enjoyed by WD 4110 as a whole, and/or by end users and the wireless network generally.

Processing circuitry 4120 may be configured to perform any determining, calculating, or similar operations (e.g., certain obtaining operations) described herein as being performed by a WD. These operations, as performed by processing circuitry 4120, may include processing information obtained by processing circuitry 4120 by, for example, converting the obtained information into other information, comparing the obtained information or converted information to information stored by WD 4110, and/or performing one or more operations based on the obtained information or converted information, and as a result of said processing making a determination.

Device readable medium 4130 may be operable to store a computer program, software, an application including one or more of logic, rules, code, tables, etc. and/or other instructions capable of being executed by processing circuitry 4120. Device readable medium 4130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 4120. In some embodiments, processing circuitry 4120 and device readable medium 4130 may be considered to be integrated.

User interface equipment 4132 may provide components that allow for a human user to interact with WD 4110. Such interaction may be of many forms, such as visual, audial, tactile, etc. User interface equipment 4132 may be operable to produce output to the user and to allow the user to provide input to WD 4110. The type of interaction may vary depending on the type of user interface equipment 4132 installed in WD 4110. For example, if WD 4110 is a smart phone, the interaction may be via a touch screen; if WD 4110 is a smart meter, the interaction may be through a screen that provides usage (e.g., the number of gallons used) or a speaker that provides an audible alert (e.g., if smoke is detected). User interface equipment 4132 may include input interfaces, devices and circuits, and output interfaces, devices and circuits. User interface equipment 4132 is configured to allow input of information into WD 4110, and is connected to processing circuitry 4120 to allow processing circuitry 4120 to process the input information. User interface equipment 4132 may include, for example, a microphone, a proximity or other sensor, keys/buttons, a touch display, one or more cameras, a USB port, or other input circuitry. User interface equipment 4132 is also configured to allow output of information from WD 4110, and to allow processing circuitry 4120 to output information from WD 4110. User interface equipment 4132 may include, for example, a speaker, a display, vibrating circuitry, a USB port, a headphone interface, or other output circuitry. Using one or more input and output interfaces, devices, and circuits, of user interface equipment 4132, WD 4110 may communicate with end users and/or the wireless network, and allow them to benefit from the functionality described herein.

Auxiliary equipment 4134 is operable to provide more specific functionality which may not be generally performed by WDs. This may comprise specialized sensors for doing measurements for various purposes, interfaces for additional types of communication such as wired communications etc. The inclusion and type of components of auxiliary equipment 4134 may vary depending on the embodiment and/or scenario.

Power source 4136 may, in some embodiments, be in the form of a battery or battery pack. Other types of power sources, such as an external power source (e.g., an electricity outlet), photovoltaic devices or power cells, may also be used. WD 4110 may further comprise power circuitry 4137 for delivering power from power source 4136 to the various parts of WD 4110 which need power from power source 4136 to carry out any functionality described or indicated herein. Power circuitry 4137 may in certain embodiments comprise power management circuitry. Power circuitry 4137 may additionally or alternatively be operable to receive power from an external power source; in which case WD 4110 may be connectable to the external power source (such as an electricity outlet) via input circuitry or an interface such as an electrical power cable. Power circuitry 4137 may also in certain embodiments be operable to deliver power from an external power source to power source 4136. This may be, for example, for the charging of power source 4136. Power circuitry 4137 may perform any formatting, converting, or other modification to the power from power source 4136 to make the power suitable for the respective components of WD 4110 to which power is supplied.

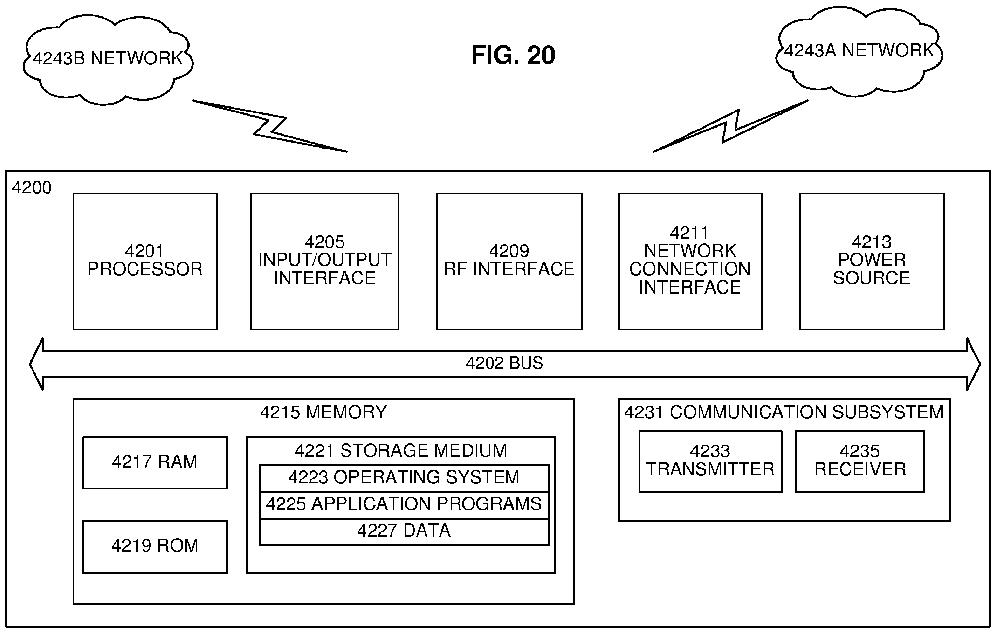

FIG. 20 illustrates a user Equipment in accordance with some embodiments.

FIG. 20 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 42200 may be any UE identified by the 3rd Generation Partnership Project (3GPP), including a NB-loT UE, a machine type communication (MTC) UE, and/or an enhanced MTC (eMTC) UE. UE 4200, as illustrated in FIG. 20, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although FIG. 20 is a UE, the components discussed herein are equally applicable to a WD, and vice-versa.

In FIG. 20, UE 4200 includes processing circuitry 4201 that is operatively coupled to input/output interface 4205, radio frequency (RF) interface 4209, network connection interface 4211, memory 4215 including random access memory (RAM) 4217, read-only memory (ROM) 4219, and storage medium 4221 or the like, communication subsystem 4231, power source 4213, and/or any other component, or any combination thereof. Storage medium 4221 includes operating system 4223, application program 4225, and data 4227. In other embodiments, storage medium 4221 may include other similar types of information. Certain UEs may utilize all of the components shown in FIG. 20, or only a subset of the components. The level of integration between the components may vary from one UE to another UE. Further, certain UEs may contain multiple instances of a component, such as multiple processors, memories, transceivers, transmitters, receivers, etc.

In FIG. 20, processing circuitry 4201 may be configured to process computer instructions and data. Processing circuitry 4201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 4201 may include two central processing units (CPUs). Data may be information in a form suitable for use by a computer.

In the depicted embodiment, input/output interface 4205 may be configured to provide a communication interface to an input device, output device, or input and output device. UE 4200 may be configured to use an output device via input/output interface 4205. An output device may use the same type of interface port as an input device. For example, a USB port may be used to provide input to and output from UE 4200. The output device may be a speaker, a sound card, a video card, a display, a monitor, a printer, an actuator, an emitter, a smartcard, another output device, or any combination thereof. UE 4200 may be configured to use an input device via input/output interface 4205 to allow a user to capture information into UE 4200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIG. 20, RF interface 4209 may be configured to provide a communication interface to RF components such as a transmitter, a receiver, and an antenna. Network connection interface 4211 may be configured to provide a communication interface to network 4243a. Network 4243a may encompass wired and/or wireless networks such as a local-area network (LAN), a wide-area network (WAN), a computer network, a wireless network, a telecommunications network, another like network or any combination thereof. For example, network 4243a may comprise a Wi-Fi network. Network connection interface 4211 may be configured to include a receiver and a transmitter interface used to communicate with one or more other devices over a communication network according to one or more communication protocols, such as Ethernet, TCP/IP, SONET, ATM, or the like. Network connection interface 4211 may implement receiver and transmitter functionality appropriate to the communication network links (e.g., optical, electrical, and the like). The transmitter and receiver functions may share circuit components, software or firmware, or alternatively may be implemented separately.

RAM 4217 may be configured to interface via bus 4202 to processing circuitry 4201 to provide storage or caching of data or computer instructions during the execution of software programs such as the operating system, application programs, and device drivers. ROM 4219 may be configured to provide computer instructions or data to processing circuitry 4201. For example, ROM 4219 may be configured to store invariant low-level system code or data for basic system functions such as basic input and output (I/O), startup, or reception of keystrokes from a keyboard that are stored in a non-volatile memory. Storage medium 4221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 4221 may be configured to include operating system 4223, application program 4225 such as a web browser application, a widget or gadget engine or another application, and data file 4227. Storage medium 4221 may store, for use by UE 4200, any of a variety of various operating systems or combinations of operating systems.

Storage medium 4221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 4221 may allow UE 4200 to access computer-executable instructions, application programs or the like, stored on transitory or non-transitory memory media, to off-load data, or to upload data. An article of manufacture, such as one utilizing a communication system may be tangibly embodied in storage medium 4221, which may comprise a device readable medium.

In FIG. 20, processing circuitry 4201 may be configured to communicate with network 4243b using communication subsystem 4231. Network 4243a and network 4243b may be the same network or networks or different network or networks. Communication subsystem 4231 may be configured to include one or more transceivers used to communicate with network 4243b. For example, communication subsystem 4231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 4233 and/or receiver 4235 to implement transmitter or receiver functionality, respectively, appropriate to the RAN links (e.g., frequency allocations and the like). Further, transmitter 4233 and receiver 4235 of each transceiver may share circuit components, software or firmware, or alternatively may be implemented separately.

In the illustrated embodiment, the communication functions of communication subsystem 4231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 4231 may include cellular communication, Wi-Fi communication, Bluetooth communication, and GPS communication. Network 4243b may encompass wired and/or wireless networks such as a local-area network (LAN), a wide-area network (WAN), a computer network, a wireless network, a telecommunications network, another like network or any combination thereof. For example, network 4243b may be a cellular network, a Wi-Fi network, and/or a near-field network. Power source 4213 may be configured to provide alternating current (AC) or direct current (DC) power to components of UE 4200.

The features, benefits and/or functions described herein may be implemented in one of the components of UE 4200 or partitioned across multiple components of UE 4200. Further, the features, benefits, and/or functions described herein may be implemented in any combination of hardware, software or firmware. In one example, communication subsystem 4231 may be configured to include any of the components described herein. Further, processing circuitry 4201 may be configured to communicate with any of such components over bus 4202. In another example, any of such components may be represented by program instructions stored in memory that when executed by processing circuitry 4201 perform the corresponding functions described herein. In another example, the functionality of any of such components may be partitioned between processing circuitry 4201 and communication subsystem 4231. In another example, the non-computationally intensive functions of any of such components may be implemented in software or firmware and the computationally intensive functions may be implemented in hardware.

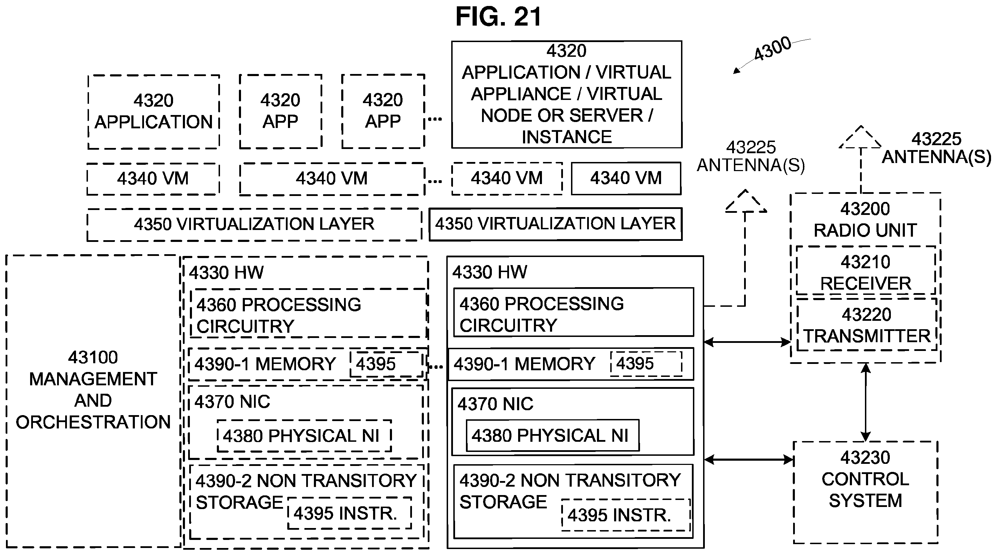

FIG. 21 illustrates a virtualization environment in accordance with some embodiments.

FIG. 21 is a schematic block diagram illustrating a virtualization environment 4300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 4300 hosted by one or more of hardware nodes 4330. Further, in embodiments in which the virtual node is not a radio access node or does not require radio connectivity (e.g., a core network node), then the network node may be entirely virtualized.

The functions may be implemented by one or more applications 4320 (which may alternatively be called software instances, virtual appliances, network functions, virtual nodes, virtual network functions, etc.) operative to implement some of the features, functions, and/or benefits of some of the embodiments disclosed herein. Applications 4320 are run in virtualization environment 4300 which provides hardware 4330 comprising processing circuitry 4360 and memory 4390. Memory 4390 contains instructions 4395 executable by processing circuitry 4360 whereby application 4320 is operative to provide one or more of the features, benefits, and/or functions disclosed herein.

Virtualization environment 4300, comprises general-purpose or special-purpose network hardware devices 4330 comprising a set of one or more processors or processing circuitry 4360, which may be commercial off-the-shelf (COTS) processors, dedicated Application Specific Integrated Circuits (ASICs), or any other type of processing circuitry including digital or analog hardware components or special purpose processors. Each hardware device may comprise memory 4390-1 which may be non-persistent memory for temporarily storing instructions 4395 or software executed by processing circuitry 4360. Each hardware device may comprise one or more network interface controllers (NICs) 4370, also known as network interface cards, which include physical network interface 4380. Each hardware device may also include non-transitory, persistent, machine-readable storage media 4390-2 having stored therein software 4395 and/or instructions executable by processing circuitry 4360. Software 4395 may include any type of software including software for instantiating one or more virtualization layers 4350 (also referred to as hypervisors), software to execute virtual machines 4340 as well as software allowing it to execute functions, features and/or benefits described in relation with some embodiments described herein.

Virtual machines 4340 comprise virtual processing, virtual memory, virtual networking or interface and virtual storage, and may be run by a corresponding virtualization layer 4350 or hypervisor. Different embodiments of the instance of virtual appliance 4320 may be implemented on one or more of virtual machines 4340, and the implementations may be made in different ways.

During operation, processing circuitry 4360 executes software 4395 to instantiate the hypervisor or virtualization layer 4350, which may sometimes be referred to as a virtual machine monitor (VMM). Virtualization layer 4350 may present a virtual operating platform that appears like networking hardware to virtual machine 4340.

As shown in FIG. 21, hardware 4330 may be a standalone network node with generic or specific components. Hardware 4330 may comprise antenna 43225 and may implement some functions via virtualization. Alternatively, hardware 4330 may be part of a larger cluster of hardware (e.g. such as in a data center or customer premise equipment (CPE)) where many hardware nodes work together and are managed via management and orchestration (MANO) 43100, which, among others, oversees lifecycle management of applications 4320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 4340 may be a software implementation of a physical machine that runs programs as if they were executing on a physical, non-virtualized machine. Each of virtual machines 4340, and that part of hardware 4330 that executes that virtual machine, be it hardware dedicated to that virtual machine and/or hardware shared by that virtual machine with others of the virtual machines 4340, forms a separate virtual network elements (VNE).

Still in the context of NFV, Virtual Network Function (VNF) is responsible for handling specific network functions that run in one or more virtual machines 4340 on top of hardware networking infrastructure 4330 and corresponds to application 4320 in FIG. 21.

In some embodiments, one or more radio units 43200 that each include one or more transmitters 43220 and one or more receivers 43210 may be coupled to one or more antennas 43225. Radio units 43200 may communicate directly with hardware nodes 4330 via one or more appropriate network interfaces and may be used in combination with the virtual components to provide a virtual node with radio capabilities, such as a radio access node or a base station.

In some embodiments, some signalling can be effected with the use of control system 43230 which may alternatively be used for communication between the hardware nodes 4330 and radio units 43200.

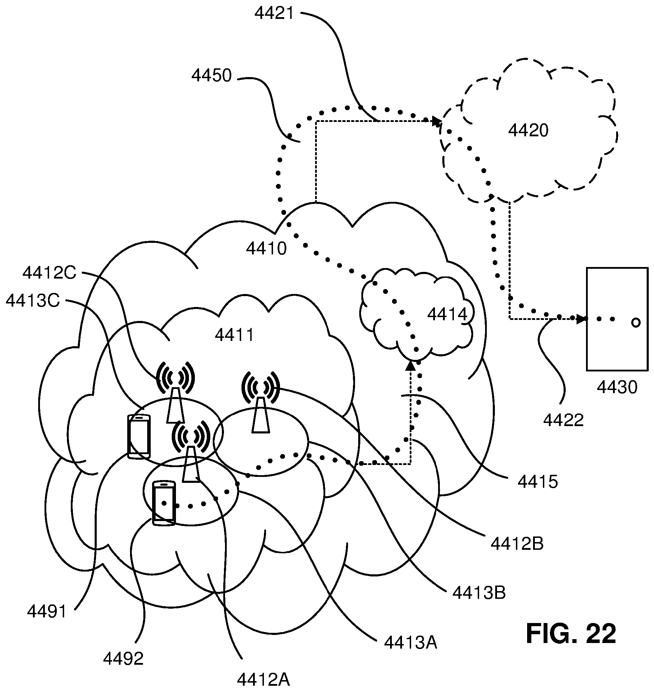

FIG. 22 illustrates a telecommunication network connected via an intermediate network to a host computer in accordance with some embodiments.

With reference to FIG. 22, in accordance with an embodiment, a communication system includes telecommunication network 4410, such as a 3GPP-type cellular network, which comprises access network 4411, such as a radio access network, and core network 4414. Access network 4411 comprises a plurality of base stations 4412a, 4412b, 4412c, such as NBs, eNBs, gNBs or other types of wireless access points, each defining a corresponding coverage area 4413a, 4413b, 4413c. Each base station 4412a, 4412b, 4412c is connectable to core network 4414 over a wired or wireless connection 4415. A first UE 4491 located in coverage area 4413c is configured to wirelessly connect to, or be paged by, the corresponding base station 4412c. A second UE 4492 in coverage area 4413a is wirelessly connectable to the corresponding base station 4412a. While a plurality of UEs 4491, 4492 are illustrated in this example, the disclosed embodiments are equally applicable to a situation where a sole UE is in the coverage area or where a sole UE is connecting to the corresponding base station 4412.

Telecommunication network 4410 is itself connected to host computer 4430, which may be embodied in the hardware and/or software of a standalone server, a cloud-implemented server, a distributed server or as processing resources in a server farm. Host computer 4430 may be under the ownership or control of a service provider, or may be operated by the service provider or on behalf of the service provider. Connections 4421 and 4422 between telecommunication network 4410 and host computer 4430 may extend directly from core network 4414 to host computer 4430 or may go via an optional intermediate network 4420. Intermediate network 4420 may be one of, or a combination of more than one of, a public, private or hosted network; intermediate network 4420, if any, may be a backbone network or the Internet; in particular, intermediate network 4420 may comprise two or more sub-networks (not shown).

The communication system of FIG. 22 as a whole enables connectivity between the connected UEs 4491, 4492 and host computer 4430. The connectivity may be described as an over-the-top (OTT) connection 4450. Host computer 4430 and the connected UEs 4491, 4492 are configured to communicate data and/or signaling via OTT connection 4450, using access network 4411, core network 4414, any intermediate network 4420 and possible further infrastructure (not shown) as intermediaries. OTT connection 4450 may be transparent in the sense that the participating communication devices through which OTT connection 4450 passes are unaware of routing of uplink and downlink communications. For example, base station 4412 may not or need not be informed about the past routing of an incoming downlink communication with data originating from host computer 4430 to be forwarded (e.g., handed over) to a connected UE 4491. Similarly, base station 4412 need not be aware of the future routing of an outgoing uplink communication originating from the UE 4491 towards the host computer 4430.

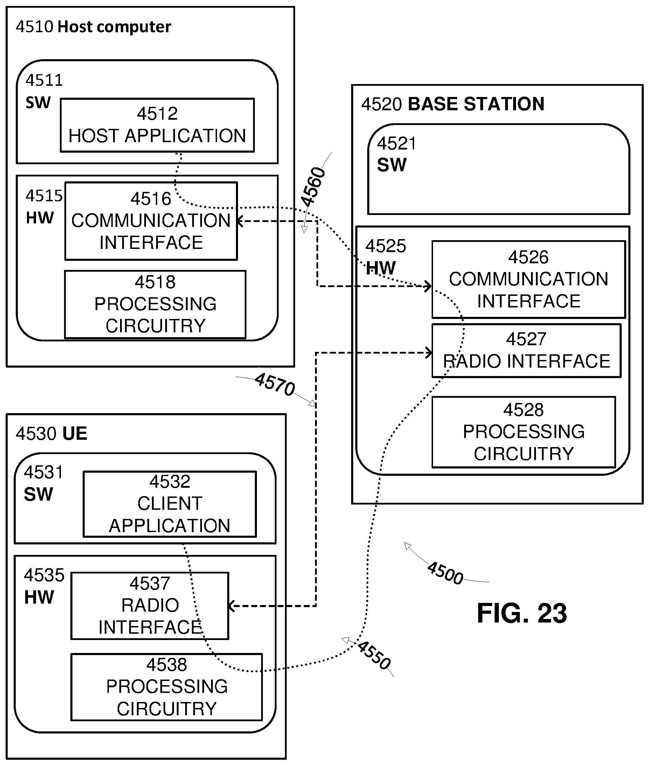

FIG. 23 illustrates a host computer communicating via a base station with a user equipment over a partially wireless connection in accordance with some embodiments.

Example implementations, in accordance with an embodiment, of the UE, base station and host computer discussed in the preceding paragraphs will now be described with reference to FIG. 23. In communication system 4500, host computer 4510 comprises hardware 4515 including communication interface 4516 configured to set up and maintain a wired or wireless connection with an interface of a different communication device of communication system 4500. Host computer 4510 further comprises processing circuitry 4518, which may have storage and/or processing capabilities. In particular, processing circuitry 4518 may comprise one or more programmable processors, application-specific integrated circuits, field programmable gate arrays or combinations of these (not shown) adapted to execute instructions. Host computer 4510 further comprises software 4511, which is stored in or accessible by host computer 4510 and executable by processing circuitry 4518. Software 4511 includes host application 4512. Host application 4512 may be operable to provide a service to a remote user, such as UE 4530 connecting via OTT connection 4550 terminating at UE 4530 and host computer 4510. In providing the service to the remote user, host application 4512 may provide user data which is transmitted using OTT connection 4550.

Communication system 4500 further includes base station 4520 provided in a telecommunication system and comprising hardware 4525 enabling it to communicate with host computer 4510 and with UE 4530. Hardware 4525 may include communication interface 4526 for setting up and maintaining a wired or wireless connection with an interface of a different communication device of communication system 4500, as well as radio interface 4527 for setting up and maintaining at least wireless connection 4570 with UE 4530 located in a coverage area (not shown in FIG. 23) served by base station 4520. Communication interface 4526 may be configured to facilitate connection 4560 to host computer 4510. Connection 4560 may be direct or it may pass through a core network (not shown in FIG. 23) of the telecommunication system and/or through one or more intermediate networks outside the telecommunication system. In the embodiment shown, hardware 4525 of base station 4520 further includes processing circuitry 4528, which may comprise one or more programmable processors, application-specific integrated circuits, field programmable gate arrays or combinations of these (not shown) adapted to execute instructions. Base station 4520 further has software 4521 stored internally or accessible via an external connection.

Communication system 4500 further includes UE 4530 already referred to. Its hardware 4535 may include radio interface 4537 configured to set up and maintain wireless connection 4570 with a base station serving a coverage area in which UE 4530 is currently located. Hardware 4535 of UE 4530 further includes processing circuitry 4538, which may comprise one or more programmable processors, application-specific integrated circuits, field programmable gate arrays or combinations of these (not shown) adapted to execute instructions. UE 4530 further comprises software 4531, which is stored in or accessible by UE 4530 and executable by processing circuitry 4538. Software 4531 includes client application 4532. Client application 4532 may be operable to provide a service to a human or non-human user via UE 4530, with the support of host computer 4510. In host computer 4510, an executing host application 4512 may communicate with the executing client application 4532 via OTT connection 4550 terminating at UE 4530 and host computer 4510. In providing the service to the user, client application 4532 may receive request data from host application 4512 and provide user data in response to the request data. OTT connection 4550 may transfer both the request data and the user data. Client application 4532 may interact with the user to generate the user data that it provides.

It is noted that host computer 4510, base station 4520 and UE 4530 illustrated in FIG. 23 may be similar or identical to host computer 4430, one of base stations 4412a, 4412b, 4412c and one of UEs 4491, 4492 of FIG. 22, respectively. This is to say, the inner workings of these entities may be as shown in FIG. 23 and independently, the surrounding network topology may be that of FIG. 22.

In FIG. 23, OTT connection 4550 has been drawn abstractly to illustrate the communication between host computer 4510 and UE 4530 via base station 4520, without explicit reference to any intermediary devices and the precise routing of messages via these devices. Network infrastructure may determine the routing, which it may be configured to hide from UE 4530 or from the service provider operating host computer 4510, or both. While OTT connection 4550 is active, the network infrastructure may further take decisions by which it dynamically changes the routing (e.g., on the basis of load balancing consideration or reconfiguration of the network).

Wireless connection 4570 between UE 4530 and base station 4520 is in accordance with the teachings of the embodiments described throughout this disclosure. One or more of the various embodiments may improve the performance of OTT services provided to UE 4530 using OTT connection 4550, in which wireless connection 4570 forms the last segment. More precisely, the teachings of these embodiments may improve the random access speed and/or reduce random access failure rates and thereby provide benefits such as faster and/or more reliable random access.

A measurement procedure may be provided for the purpose of monitoring data rate, latency and other factors on which the one or more embodiments improve. There may further be an optional network functionality for reconfiguring OTT connection 4550 between host computer 4510 and UE 4530, in response to variations in the measurement results. The measurement procedure and/or the network functionality for reconfiguring OTT connection 4550 may be implemented in software 4511 and hardware 4515 of host computer 4510 or in software 4531 and hardware 4535 of UE 4530, or both. In embodiments, sensors (not shown) may be deployed in or in association with communication devices through which OTT connection 4550 passes; the sensors may participate in the measurement procedure by supplying values of the monitored quantities exemplified above, or supplying values of other physical quantities from which software 4511, 4531 may compute or estimate the monitored quantities. The reconfiguring of OTT connection 4550 may include message format, retransmission settings, preferred routing etc.; the reconfiguring need not affect base station 4520, and it may be unknown or imperceptible to base station 4520. Such procedures and functionalities may be known and practiced in the art. In certain embodiments, measurements may involve proprietary UE signaling facilitating host computer 4510's measurements of throughput, propagation times, latency and the like. The measurements may be implemented in that software 4511 and 4531 causes messages to be transmitted, in particular empty or 'dummy' messages, using OTT connection 4550 while it monitors propagation times, errors etc.

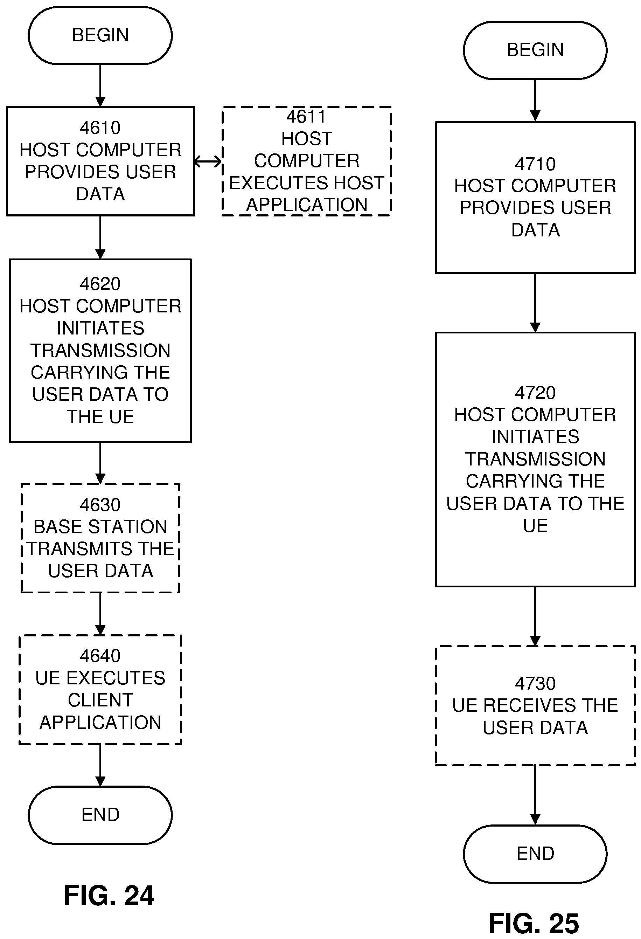

FIG. 24 illustrates methods implemented in a communication system including a host computer, a base station and a user equipment in accordance with some embodiments.

FIG. 24 is a flowchart illustrating a method implemented in a communication system, in accordance with one embodiment. The communication system includes a host computer, a base station and a UE which may be those described with reference to FIGS. 22 and 23. For simplicity of the present disclosure, only drawing references to FIG. 24 will be included in this section. In step 4610, the host computer provides user data. In substep 4611 (which may be optional) of step 4610, the host computer provides the user data by executing a host application. In step 4620, the host computer initiates a transmission carrying the user data to the UE. In step 4630 (which may be optional), the base station transmits to the UE the user data which was carried in the transmission that the host computer initiated, in accordance with the teachings of the embodiments described throughout this disclosure. In step 4640 (which may also be optional), the UE executes a client application associated with the host application executed by the host computer.

FIG. 25 illustrates methods implemented in a communication system including a host computer, a base station and a user equipment in accordance with some embodiments.

FIG. 25 is a flowchart illustrating a method implemented in a communication system, in accordance with one embodiment. The communication system includes a host computer, a base station and a UE which may be those described with reference to FIGS. 22 and 23. For simplicity of the present disclosure, only drawing references to FIG. 25 will be included in this section. In step 4710 of the method, the host computer provides user data. In an optional substep (not shown) the host computer provides the user data by executing a host application. In step 4720, the host computer initiates a transmission carrying the user data to the UE. The transmission may pass via the base station, in accordance with the teachings of the embodiments described throughout this disclosure. In step 4730 (which may be optional), the UE receives the user data carried in the transmission.

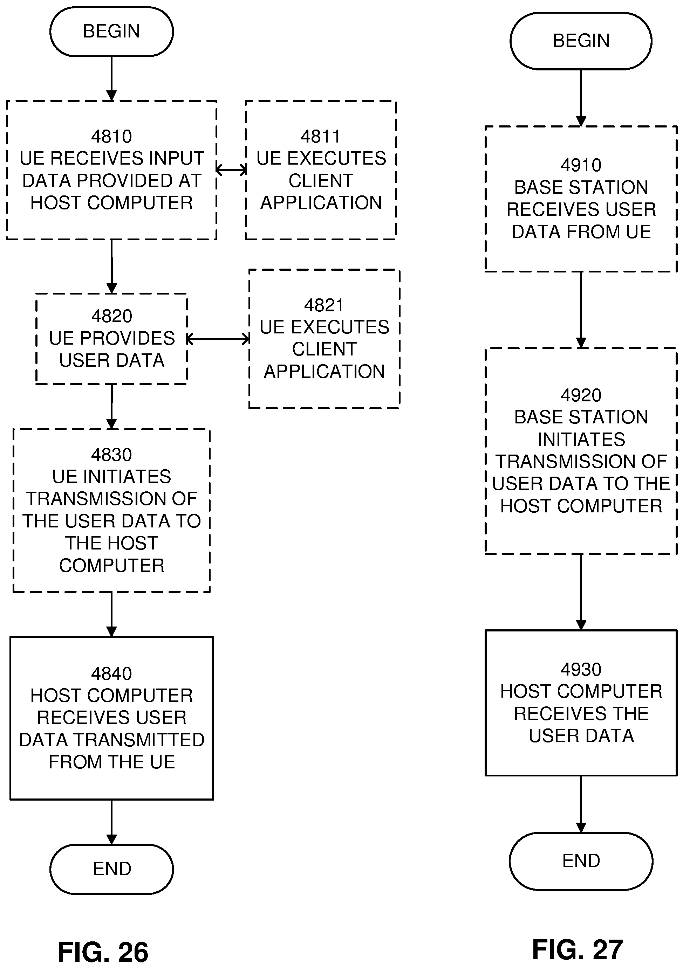

FIG. 26 illustrates methods implemented in a communication system including a host computer, a base station and a user equipment in accordance with some embodiments

FIG. 26 is a flowchart illustrating a method implemented in a communication system, in accordance with one embodiment. The communication system includes a host computer, a base station and a UE which may be those described with reference to FIGS. 22 and 23. For simplicity of the present disclosure, only drawing references to FIG. 26 will be included in this section. In step 4810 (which may be optional), the UE receives input data provided by the host computer. Additionally or alternatively, in step 4820, the UE provides user data. In substep 4821 (which may be optional) of step 4820, the UE provides the user data by executing a client application. In substep 4811 (which may be optional) of step 4810, the UE executes a client application which provides the user data in reaction to the received input data provided by the host computer. In providing the user data, the executed client application may further consider user input received from the user. Regardless of the specific manner in which the user data was provided, the UE initiates, in substep 4830 (which may be optional), transmission of the user data to the host computer. In step 4840 of the method, the host computer receives the user data transmitted from the UE, in accordance with the teachings of the embodiments described throughout this disclosure.

FIG. 27 illustrates methods implemented in a communication system including a host computer, a base station and a user equipment in accordance with some embodiments

FIG. 27 is a flowchart illustrating a method implemented in a communication system, in accordance with one embodiment. The communication system includes a host computer, a base station and a UE which may be those described with reference to FIGS. 22 and 23. For simplicity of the present disclosure, only drawing references to FIG. 27 will be included in this section. In step 4910 (which may be optional), in accordance with the teachings of the embodiments described throughout this disclosure, the base station receives user data from the UE. In step 4920 (which may be optional), the base station initiates transmission of the received user data to the host computer. In step 4930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH: Ec/No CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- OUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

### Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the spirit and scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

For the avoidance of doubt, the present invention includes the subject-matter as defined in the following numbered clauses:
1. A method performed by a communication device in a network that includes a network node, the method comprising:
   receiving (1101) a buffer status report, BSR, format configuration specifying at least one non-legacy BSR format and/or at least one non-legacy buffer status table to use for reporting BSR to the network node;
   responsive to receiving selecting (1103) a non-legacy BSR format from the at least one non-legacy BSR format and/or a non-legacy buffer status table from the at least one non-legacy buffer status table;
   generating (1105) a BSR report based on the non-legacy BSR format and/or the non-legacy buffer status table; and
   transmitting (1107) the BSR report towards the network node.
2. The method of Clause 1, wherein selecting the non-legacy BSR format comprises:
   selecting the non-legacy BSR format; and
   selecting at least one legacy BSR format from a group of legacy BSR formats, and
   wherein the BSR report comprises an indication of the non-legacy BSR format and the at least one legacy BSR format.
3. The method of any of Clauses 1-2, further comprising:
   transmitting (1201) a BSR indication message to the network node, the BSR indication message indicating that the communication device supports the at least one non-legacy BSR format and/or the at least one non-legacy buffer status table;
   receiving (1203) a configuration message from the network node, the configuration message specifying one or more non-legacy BSR formats and/or one or more non-legacy buffer status tables to use for BSR reporting; and
   configuring (1205) the communication device for BSR reporting based on the configuration message, thereby creating a BSR reporting configuration.
4. The method of Clause 3 wherein the configuration message specifies at least one of:
   the one or more non-legacy BSR formats and/or one or more non-legacy buffer status tables to use for BSR reporting for a logical channel group, LCG, or logical channel identity, LCID; and
   an LCG or LCID in which the one or more non-legacy BSR formats and/or one or more legacy buffer status tables are to be used.
5. The method of any of Clauses 1-4, wherein generating the BSR report comprises, responsive to only one logical channel group, LCG, having data and this LCG or a logical channel identity, LCID, which received data and belongs to this LCG, having been configured to use the non-legacy BSR format, at least one of:
   using (1301) the non-legacy BSR format to generate the BSR report for the LCG or the LCID;
   using (1305) a short BSR format to report the LCG or LCID and using the non-legacy BSR format to report a buffer status of the LCG or LCID;
   responsive to a buffer status being below a first threshold, using (1307) a short BSR format to report the BSR;
   responsive to the buffer status being above the first threshold, using (1309) the non-legacy BSR format to report the BSR;
   responsive to a buffer status index being below a second threshold, using (1315) a short BSR format to report the BSR; and
   responsive to the buffer status index in a legacy buffer status index being above the second threshold, using (1317) the non-legacy BSR format to report the BSR.
6. The method of any of Clauses 1-4, wherein generating the BSR report comprises, responsive to more than one logical channel group, LCG, having data available for transmission and responsive to there being uplink, UL, data for a logical channel which was configured with the non-legacy BSR format, or for a logical channel which belongs to an LCG which is configured to use the non-legacy BSR format and the BSR being triggered due to the UL data or due to a timer expiring, at least one of:
   using (1401) a long BSR format to report a buffer status and the non-legacy BSR format to report a logical channel identifier, LCID, or the LCG.
   using (1403) the non-legacy BSR format to report a buffer status for a logical channel identifier, LCID, or the LCG; and
   using (1405) the long BSR format to report buffer status for a logical channel which has data and was not configured with the non-legacy BSR format, or for a logical channel which has data and belongs to an LCG which is not configured to use the non-legacy BSR format.
   using (1407) a long truncated BSR format to report a buffer status and the non-legacy BSR format to report a logical channel identifier, LCID, or the LCG,
   using (1411) the non-legacy BSR format to report a buffer status for a logical channel identifier, LCID, or LCG,
7. The method of any of Clauses 1-6, wherein generating a BSR report based on the BSR format and buffer status table selected comprises:
   responsive to there being a sufficient number of padding bits remaining in a buffer for a message being sent towards the network node after any legacy BSR formats are added to the buffer and there is at least one LCG or at least one LCID has been configured to use the non-legacy BSR format, using (1501) the non-legacy format to report buffer status for the at least one LCG or the at least one LCID using the padding bits remaining,
   the method further comprising:
      responsive to not all LCGs or LCIDs of the at least one LCG and the at least one LCID being able to use the padding bits remaining, reporting (1601) buffer status of the at least one LCG and the at least one LCID in order of a highest priority using the padding bits remaining.
8. The method of any of Clauses 1-6, wherein generating a BSR report based on the BSR format and buffer status table selected comprises:
   responsive to there being a sufficient number of padding bits remaining in a buffer for a message being sent towards the network node after any legacy BSR formats are added to the buffer and there is at least one LCG or at least one LCID has been configured to use the non-legacy BSR format, and if the buffer status for the configured LCG(s) or LCID(s) are above a first threshold or a buffer status index in the legacy buffer status table is above a second threshold, using (1701) the non-legacy format to report buffer status for the at least one LCG or the at least one LCID using the padding bits remaining.
9. A communication device (400) adapted to perform any of the operations of Clauses 1-8.
10. A communication device (400) comprising:
   processing circuitry (403); and
   memory (405) coupled with the processing circuitry, wherein the memory includes instructions that when executed by the processing circuitry causes the communication device to perform any of the operations of Clauses 1-8.
11. A computer program comprising program code to be executed by processing circuitry (403) of a communication device (400), whereby execution of the program code causes the communication device (400) to perform operations according to any of Clauses 1-8.
12. A computer program product comprising a non-transitory storage medium including program code to be executed by processing circuitry (403) of a communication device (400), whereby execution of the program code causes the communication device (400) to perform operations according to any of Clauses 1-8.
13. A method performed by a network node in a network, the method comprising:
   receiving (1801) a buffer status report, BSR, indication message from a communication device, the BSR indication message indicating at least one non-legacy BSR format and/or at least one non-legacy buffer status table the communication device supports;
   determining (1803) which non-legacy BSR formats and/or non-legacy BSR buffer status tables are supported by the communication device based on the BSR indication message;
   determining (1805) at least one non-legacy BSR format and/or at least one non-legacy BSR buffer status table for the communication device to use based on which non-legacy BSR formats and/or non-legacy BSR buffer status tables are supported by the communication device; and
   transmitting (1807) a radio resource control, RRC, configuration message indicating one or more non-legacy BSR formats and/or one or more non-legacy buffer status tables to use for BSR reporting for the communication device to use.
14. The method of Clause 13, further comprising at least one of:
   receiving a configuration acknowledgement message; and
   receiving (1809) a BSR with at least one non-legacy BSR format from the communication device.
15. A radio access network, RAN, node (500) adapted to perform any of the operations of Clauses 13-14.
16. A radio access network, RAN, node (500) comprising:
   processing circuitry (503); and
   memory (505) coupled with the processing circuitry, wherein the memory includes instructions that when executed by the processing circuitry causes the RAN node to perform any of the operations of Clauses 13-14.
17. A computer program comprising program code to be executed by processing circuitry (503) of a radio access network, RAN, node (500), whereby execution of the program code causes the RAN node (500) to perform operations according to any of Clauses 13-14.
18. A computer program product comprising a non-transitory storage medium including program code to be executed by processing circuitry (503) of a radio access network, RAN, node (500), whereby execution of the program code causes the RAN node (500) to perform operations according to any of Clauses 13-14.

## Claims

1. A method performed by a communication device for reporting a buffer status report, BSR, to a network node, the method comprising:
receiving a configuration message from the network node, the configuration message indicating one or more Logical Channel Identities, LCIDs, or Logical Channel Groups, LCGs, for which a specific buffer status table would apply; and
transmitting the BSR toward the network node, wherein the BSR is transmitted using a BSR format that, for each of one or more LCIDs or LCGs reported by the BSR, includes:
an indication of the respective LCID or LCG;
an indication of an indicated buffer status table based on which the BSR reports a buffer status of the respective LCID or LCG, wherein the indicated buffer status table forms one of a plurality of buffer status tables that includes the specific buffer status table and one or more other buffer status tables; and
an indication of the buffer status for the respective LCID or LCG according to the indicated buffer status table.

2. The method of claim 1, wherein the one or more LCIDs or LCGs reported by the BSR include:
a first LCID or LCG reported according to the specific buffer status table, wherein the first LCID or LCG is among the one or more LCIDs or LCGs for which the configuration message received from the network node indicated that the specific buffer status table would apply; and
a second LCID or LCG reported according to one of the one or more other buffer status tables.

3. The method of claim 2, wherein the buffer status for the first LCID or LCG is above a threshold.

4. The method of any of claims 2-3, wherein:
the second LCID or LCG is not among the one or more LCIDs or LCGs for which the configuration message received from the network node indicated that the specific buffer status table would apply; or
the second LCID or LCG is among the one or more LCIDs or LCGs for which the configuration message received from the network node indicated that the specific buffer status table would apply, and the buffer status for the second LCID or LCG is below a threshold.

5. The method of any of claims 2-4, wherein:
the specific buffer status table that is used for reporting the first LCID or LCG is not defined for a format that is one of: a short BSR format, a short truncated BSR format, a long BSR format, or a long truncated BSR format; and
the other buffer status table that is used for reporting the second LCID or LCG is defined for a format that is one of: the short BSR format, the short truncated BSR format, the long BSR format, or the long truncated BSR format.

6. The method of any of claims 1-5, wherein the indication of the indicated buffer status table comprises a table index.

7. The method of any of claims 1-6, wherein the indication of the buffer status for the respective LCID or LCG comprises a buffer size index of the indicated buffer status table.

8. The method of any of claims 1-7, further comprising:
indicating, to the network node, that the communication device supports the specific buffer status table;
wherein the configuration message from the network node is based on the indicated support of the specific buffer status table by the communication device.

9. A method performed by a network node for receiving a buffer status report, BSR, from a communication device, the method comprising:
transmitting a configuration message to the communication device, the configuration message indicating one or more Logical Channel Identities, LCIDs, or Logical Channel Groups, LCGs, for which a specific buffer status table would apply; and
receiving the BSR from the communication device, wherein the BSR is received according to a BSR format that, for each of one or more LCIDs or LCGs reported by the BSR, includes:
an indication of the respective LCID or LCG;
an indication of an indicated buffer status table based on which the BSR reports a buffer status of the respective LCID or LCG, wherein the indicated buffer status table forms one of a plurality of buffer status tables that includes the specific buffer status table and one or more other buffer status tables; and
an indication of the buffer status for the respective LCID or LCG according to the indicated buffer status table.

10. The method of claim 9, wherein the one or more LCIDs or LCGs reported by the BSR include:
a first LCID or LCG reported according to the specific buffer status table, wherein the first LCID or LCG is among the one or more LCIDs or LCGs for which the configuration message transmitted to the communication device indicated that the specific buffer status table would apply; and
a second LCID or LCG reported according to one of the one or more other buffer status tables.

11. The method of claim 10, wherein the buffer status for the first LCID or LCG is above a threshold.

12. The method of any of claims 10-11, wherein:
the second LCID or LCG is not among the one or more LCIDs or LCGs for which the configuration message transmitted to the communication device indicated that the specific buffer status table would apply; or
the second LCID or LCG is among the one or more LCIDs or LCGs for which the configuration message transmitted to the communication device indicated that the specific buffer status table would apply, and the buffer status for the second LCID or LCG is below a threshold.

13. The method of any of claims 10-12, wherein:
the specific buffer status table that is used for reporting the first LCID or LCG is not defined for a format that is one of: a short BSR format, a short truncated BSR format, a long BSR format, or a long truncated BSR format; and
the other buffer status table that is used for reporting the second LCID or LCG is defined for a format that is one of: the short BSR format, the short truncated BSR format, the long BSR format, or the long truncated BSR format.

14. A communication device (400) configured to report a buffer status report, BSR, to a network node, the communication device comprising:
processing circuitry (403); and
memory (405) coupled with the processing circuitry, wherein the memory includes instructions that when executed by the processing circuitry causes the communication device to perform operations comprising:
receiving a configuration message from the network node, the configuration message indicating one or more Logical Channel Identities, LCIDs, or Logical Channel Groups, LCGs, for which a specific buffer status table would apply; and
transmitting the BSR toward the network node, wherein the BSR is transmitted using a BSR format that, for each of one or more LCIDs or LCGs reported by the BSR, includes:
an indication of the respective LCID or LCG;
an indication of an indicated buffer status table based on which the BSR reports a buffer status of the respective LCID or LCG, wherein the indicated buffer status table forms one of a plurality of buffer status tables that includes the specific buffer status table and one or more other buffer status tables; and
an indication of the buffer status for the respective LCID or LCG according to the indicated buffer status table.

15. A radio access network, RAN, node (500) configured to receive a buffer status report, BSR, from a communication device, the RAN node comprising:
processing circuitry (503); and
memory (505) coupled with the processing circuitry, wherein the memory includes instructions that when executed by the processing circuitry causes the RAN node to perform operations comprising:
transmitting a configuration message to the communication device, the configuration message indicating one or more Logical Channel Identities, LCIDs, or Logical Channel Groups, LCGs, for which a specific buffer status table would apply; and
receiving the BSR from the communication device, wherein the BSR is received according to a BSR format that, for each of one or more LCIDs or LCGs reported by the BSR, includes:
an indication of the respective LCID or LCG;
an indication of an indicated buffer status table based on which the BSR reports a buffer status of the respective LCID or LCG, wherein the indicated buffer status table forms one of a plurality of buffer status tables that includes the specific buffer status table and one or more other buffer status tables; and
an indication of the buffer status for the respective LCID or LCG according to the indicated buffer status table.
